# EUROPÄISCHE PATENTANMELDUNG

(11) **EP 4 415 235 A1**
(43) Veröffentlichungstag der Anmeldung: **14.08.2024**
(21) Anmeldenummer: 23206541.7
(22) Anmeldetag: 27.10.2023
(51) Int. Cl.: H02K 15/12, H02K 15/10

(54) **IMPRÄGNIERANLAGE FÜR STATOREN MIT TRANSPORTEINRICHTUNG**

(30) Priorität: 10.02.2023 DE 102023103270; 24.03.2023 DE 102023107558
(71) Anmelder: Grob-Werke GmbH & Co. KG, 87719 Mindelheim (DE)
(72) Erfinder: Rauscher, Ralf, 87748 Fellheim (DE); Zoller, Robert, 87785 Winterrieden (DE); Schretzenmaier, Georg, 89331 Burgau (DE); Salger, Manuel, 87742 Dirlewang (DE)
(74) Vertreter: KASTEL Patentanwälte PartG mbB

(57) **Zusammenfassung**

Die Erfindung schafft eine Imprägnieranlage (26) zum Imprägnieren von Statoren (10) in Serienfertigung, umfassend eine Transporteinrichtung (40) zum Transportieren einer Reihe von Statoren (10) durch Bereiche der Imprägnieranlage (26), wobei die Transporteinrichtung (40) eine umlaufende Transportbahn (142) mit einem Vorlaufbereich (144) und einem Rücklaufbereich (146) sowie Umlenkbereichen (148, 150) dazwischen und ein Förderband (42) aufweist, das dazu ausgebildet ist, dass die Statoren (10) quer zur jeweiligen Statorachse auf dem Förderband (42) abgelegt oder abgehoben werden können und beim Transport durch den Vorlauf- oder Rücklaufbereich (148, 150) zumindest abschnittsweise drehend auf dem Förderband (42) aufliegen.

## Beschreibung

Die Erfindung betrifft eine Imprägnieranlage zum Imprägnieren von Statoren in Serienfertigung. Weiter betrifft die Erfindung ein Imprägnierverfahren zum Imprägnieren von Statoren in Serienfertigung unter Verwendung einer solchen Imprägnieranlage.

Zum technologischen Hintergrund wird auf folgende Literaturstellen verwiesen:
[1] DE 1 279 156 A
[2] DE 10 2019 120 713 A1
[3] DE 10 2017 001 939 A1
[4] DE 10 2019 121 956 A1
[5] US 3 696 420 A1
[6] JP 2015-76984 A
[7] JP 2015-318692 A
[8] WO 2022/171353 A1
[9] DE 10 2019 106 392 A1
[10] WO 2019/123137 A1
[11] WO 2018/154277 A1
[12] DE 10 2021 105 959 A1
[13] DE 10 2019 004 954 B3

Aus den Literaturstellen [1] bis [13] sind Einheiten sowie Vorrichtungen und Verfahren bekannt, die bei einer Imprägnierung von Statoren, insbesondere beim Träufelimprägnieren, eingesetzt werden.

Beim Herstellen von Statoren, insbesondere bei Statoren für einen Traktionsantrieb, ist es demnach unter anderem auch üblich, dass eine Wicklung des Stators mit einem Harz getränkt wird (Imprägnieren). Üblich sind hier über Temperatur aushärtende Harze, oder auch zwei-komponentige Harze. Übliche sind Polyesterharze, Polyersterimidharze oder Epoxidharze. Das Aufbringen der Harze auf bzw. in die Wicklung im Stator kann durch das Tauchverfahren, Rollverfahren oder auch Träufelverfahren erfolgen. Die Statoren können hierbei durch unterschiedlichste Wicklungsverfahren entstehen, insbesondere ist die Wicklung eine Flachdrahtwicklung, auch Hairpin- oder Wellenwicklung genannt, oder eine Runddrahtwicklung wie sie z.B. in der Einzugstechnik üblich ist. Zwischen der Wicklung und dem Blechpaket befindet sich bei den Statoren von 48V bis über 1000V üblicherweise eine zusätzliche Isolation, oftmals als Isolationspapier20 ausgeführt.

Die Erfindung hat sich zur Aufgabe gestellt, eine hinsichtlich der Handhabung von Statoren bei einem im Zuge einer industriellen Großserienfertigung durchzuführenden Imprägnieren verbesserte Imprägnieranlage zur Verfügung zu stellen.

Zum Lösen dieser Aufgabe schafft die Erfindung eine Imprägnieranlage nach Anspruch 1.

Vorteilhafte Ausgestaltungen sind Gegenstand der Unteransprüche.

Die Erfindung schafft eine Imprägnieranlage zum Imprägnieren von Statoren in Serienfertigung, umfassend eine Transporteinrichtung zum Transportieren einer Reihe von Statoren durch Bereiche der Imprägnieranlage, wobei die Transporteinrichtung eine umlaufende Transportbahn mit einem Vorlaufbereich und einem Rücklaufbereich sowie Umlenkbereichen dazwischen und ein Förderband aufweist, das dazu ausgebildet ist, dass die Statoren quer zur jeweiligen Statorachse auf dem Förderband abgelegt oder abgehoben werden können und beim Transport durch den Vorlauf- oder Rücklaufbereich zumindest abschnittsweise drehend auf dem Förderband aufliegen.

Es ist bevorzugt, dass das Förderband in dem Vorlaufbereich unterhalb der Statorachsen der sich im Betrieb in dem Vorlaufbereich befindlichen Statoren angeordnet ist, so dass die Statoren auf dem Förderband aufliegend durch den Vorlaufbereich der Transportbahn transportierbar sind, und dass die Transporteinrichtung in dem Rücklaufbereich eine Lauffläche zum Aufliegen der durch den Rücklaufbereich zu transportierenden Statoren aufweist.

Es ist bevorzugt, dass das Förderband in dem Rücklaufbereich oberhalb der sich im Betrieb in dem Rücklaufbereich befindlichen Statoren angeordnet ist und dazu eingerichtet ist, die Bewegung der auf der Lauffläche abrollenden Statoren anzutreiben.

Es ist bevorzugt, dass an einem Anfang des Vorlaufbereichs der umlaufenden Transportbahn eine Be- und Entladestelle angeordnet und so ausgebildet ist, dass die Statoren quer zur Statorachse auf dem Förderband abgelegt und davon abgehoben werden können.

Es ist bevorzugt, dass die Umlenkbereiche Umlenkkurven zum Erfassen der Statoren und Umlenken derer Bewegungsbahnen aufweisen.

Es ist bevorzugt, dass der Vorlaufbereich und der Rücklaufbereich übereinander angeordnet sind oder dass der Vorlaufbereich über dem Rücklaufbereich angeordnet ist.

Es ist bevorzugt, dass der Vorlaufbereich der Transportbahn durch einen Imprägnierbereich und einen Gelierbereich der Imprägnieranlage führt, wobei in dem Imprägnierbereich und dem Gelierbereich ein Drehantriebsgetriebe zum Antreiben einer Drehbewegung der auf dem Förderband liegenden Statoren vorgesehen ist.

Es ist bevorzugt, dass der Rücklaufbereich und/oder wenigstens einer der Umlenkbereiche durch einen in Transportrichtung nach einem Gelierbereich liegenden Aushärtebereich der Imprägnieranlage führt.

Es ist bevorzugt, dass das Förderband wenigstens ein umlaufendes Zugmittel sowie daran angebrachte Rollen oder Walzen zum rollenden Aufliegen der Statoren aufweist, welche Rollen oder Walzen um sich quer zur Transportrichtung verlaufende Drehachsen drehbar sind.

Es ist bevorzugt, dass die Rollen oder Walzen ausgewählt sind aus einer Gruppe, die Rollen mit Bordscheiben, Rollen oder Walzen mit Ritzel, Rollen mit V-Nuten, Rollen mit balliger Lauffläche, Rollen mit Ringvorsprung an der Lauffläche, Rollen mit Rillen an der Lauffläche, aktiv angetriebene Rollen, aktiv angetriebene Ritzel und durch eine gemeinsame Welle verbundene Rollen, Ritzel und Konturräder umfasst.

Es ist bevorzugt, dass Aufnahmebereiche an dem Förderband zum Angreifen an einem Stator jeweils eine erste bis vierte Rolle umfassen, wobei die erste und zweite Rolle axial beabstandet zueinander dazu angeordnet sind, an wenigstens einer Rollfläche des zylindrischen Stators oder eines den Stator haltenden Halters in einer Winkelstellung zwischen 3 Uhr und 6 Uhr anzugreifen, und die dritte und vierte Rolle axial beabstandet zueinander dazu angeordnet sind, an der wenigstens einen Rollfläche in einer Winkelstellung zwischen 6 Uhr und 9 Uhr anzugreifen.

Es ist bevorzugt, dass das Förderband oder eine Rolleinrichtung der Imprägnieranlage benachbarte Auflageplätze für einen ersten und einen zweiten Stator aufweist, wobei zwischen den Aufnahmeplätzen eine gemeinsame Welle oder Rolle angeordnet ist, die dazu ausgebildet ist, dass der erste und zweite Stator darauf aufliegen, so dass eine Drehung des einen Stators über die gemeinsame Welle oder Rolle auf den zweiten Stator übertragbar ist oder dass der erste und zweite Stator über die gemeinsame Welle oder Rolle drehend angetrieben werden.

Es ist bevorzugt, dass das Förderband zusätzlich zu dem umlaufenden Zugmittel zumindest an einem des Vorlaufbereichs und des Rücklaufbereichs ein zweites Zugmittel aufweist, das unabhängig von dem umlaufenden Zugmittel bewegbar ist und zum Antreiben einer Rotationsbewegung der Statoren oder der Rollen oder Walzen ausgebildet ist.

Bei einer möglichen Verwendung bevorzugter Ausführungsformen der Imprägnieranlage werden Statoren mit zumindest teilweise zylindrischen Außenflächen imprägniert, an denen wenigstens eine Rollfläche ausgebildet ist. Die Statoren werden vorzugsweise mit der wenigstens eine Rollfläche unmittelbar auf dem Förderband abgelegt.

Bevorzugte Ausführungsformen der Imprägnieranlage weisen mehrere Halter für die Statoren auf, die als Käfig zur Aufnahme eines Stators mit wenigstens einer um den aufgenommenen Stator herum laufenden Rollfläche zur rollenden Auflage auf dem Förderband ausgebildet sind.

Bei einigen Ausführungsformen ist der jeweilige Halter zum Halten, Drehen und Transportieren des Stators im Zuge eines Imprägnierens des Stators mit Harz ausgebildet, wobei der Halter eine Spanneinrichtung zum Einspannen des Stators und wenigstens eine Rollfläche zum rollenden Abstützen des sich drehenden Halters mit eingespanntem Stator aufweist. In dem jeweiligen Halter können auch Statoren gehalten werden, die aufgrund ihrer Außenkontur - z.B. aufgrund einer unrunden Kontur und/oder aufgrund von Vorsprüngen an dem Außenumfang - nicht drehend angetrieben unmittelbar auf dem Förderband abgelegt werden können.

Anmerkung: im Sinne der hiesigen Offenbarung können unter "die wenigstens eine Rollfläche" eine einzelne an dem Halter vorgesehene Rollfläche, eine von mehreren an dem Halter vorgesehenen Rollflächen, einige von mehreren an dem Halter vorgesehenen Rollflächen oder alle an dem Halter vorgesehenen Rollflächen gemeint sein.

Es ist bevorzugt, dass die wenigstens eine Rollfläche an einem radial am weitesten vorstehenden Außenumfang des Halters vorgesehen ist.

Es ist bevorzugt, dass wenigstens eine erste und wenigstens eine zweite axial beabstandete Rollfläche vorgesehen sind.

Es ist bevorzugt, dass die erste Rollfläche an einem ersten axialen Endbereich des Halters und die zweite Rollfläche an einem zweiten axialen Endbereich des Halters vorgesehen ist.

Es ist bevorzugt, dass die wenigstens eine Rollfläche an wenigstens einem Ringbereich des Halters ausgebildet ist.

Es ist bevorzugt, dass die erste Rollfläche an einem ersten Ringelement des Halters ausgebildet ist und die zweite Rollfläche an einem zweiten Ringelement des Halters ausgebildet ist und dass das erste und das zweite Ringelement axial miteinander verbunden sind.

Es ist bevorzugt, dass Ringelemente des Halters mittels axialer Streben miteinander verbunden sind.

Es ist bevorzugt, dass die erste und zweite Rollfläche einen gleichen Durchmesser haben.

Bei einigen Ausführungsformen ist vorgesehen, dass die wenigstens eine Rollfläche oder wenigstens eine von mehreren Rollflächen zumindest bereichsweise zylindermantelförmig ausgebildet ist. Bei einigen Ausführungsformen ist vorgesehen, dass die wenigstens eine Rollfläche oder wenigstens eine von mehreren Rollflächen zumindest bereichsweise konisch ausgebildet ist. Bei einigen Ausführungsformen ist vorgesehen, dass die wenigstens eine Rollfläche oder wenigstens eine von mehreren Rollflächen zumindest bereichsweise ballig ausgebildet ist. Bei einigen Ausführungsformen ist vorgesehen, dass die wenigstens eine Rollfläche oder wenigstens eine von mehreren Rollflächen zumindest bereichsweise im axialen Schnitt konvex gekrümmt ausgebildet ist. Bei einigen Ausführungsformen ist vorgesehen, dass die wenigstens eine Rollfläche oder wenigstens eine von mehreren Rollflächen zumindest bereichsweise im axialen Schnitt konkav gekrümmt ausgebildet ist. Bei einigen Ausführungsformen ist vorgesehen, dass die wenigstens eine Rollfläche oder wenigstens eine von mehreren Rollflächen wenigstens eine Rille aufweist. Bei einigen Ausführungsformen ist vorgesehen, dass die wenigstens eine Rollfläche oder wenigstens eine von mehreren Rollflächen einen umlaufenden Ringvorsprung oder eine umlaufende Rippe aufweist.

Es ist bevorzugt, dass die wenigstens eine Rollfläche wenigstens einen ersten umlaufenden konischen Bereich und wenigstens einen zweiten umlaufenden konischen Bereich aufweist, wobei der erste und der zweite konische Bereich entgegengerichtet geneigt sind und/oder spiegelbildlich zueinander ausgebildet sind.

Es ist bevorzugt, dass die Spanneinrichtung zum radialen und/oder axialen formschlüssigen und/oder kraftschlüssigen Einspannen des Stators an einer Außenseite des Stators ausgebildet ist.

Es ist bevorzugt, dass die Spanneinrichtung radial bewegliche Spannelemente mit radial nach innen gerichteten Spannflächen und/oder axial bewegliche Spannelemente mit axial zueinander gerichteten Spannflächen aufweist.

Es ist bevorzugt, dass die Spannelemente an den Streben radial beweglich angeordnet sind.

Es ist bevorzugt, dass die Spanneinrichtung wenigstens ein Gewinde zum Bewegen wenigstens eines Spannelements der Spanneinrichtung durch Schrauben aufweist.

Es ist bevorzugt, dass die Spanneinrichtung wenigstens eine Feder zum elastischen Einspannen des Stators aufweist.

Es ist bevorzugt, dass die Spanneinrichtung dazu ausgebildet ist, in einer Freigabestellung den Stator ohne Demontage von Spannelementen der Spanneinrichtung aufzunehmen.

Es ist bevorzugt, dass die Spanneinrichtung Spannelemente aufweist, die radial innerhalb der wenigstens einen Rollfläche angeordnet sind.

Es ist bevorzugt, dass Spannelemente der Spanneinrichtung an Ringelementen des Halters ausgebildet sind, an deren Außenumfang die wenigstens eine Rollfläche ausgebildet ist.

Bevorzugte Ausgestaltungen der Erfindung betreffen eine Imprägnieranlage, insbesondere eine Träufelanlage, mit einem als Umlaufsystem ausgebildeten Förderprinzip.

Be einigen Ausführungsformen weist die Imprägnieranlage mehrere Anlagenbereiche oder Anlagenkomponenten auf, durch welche Statoren mittels des Förderbandes geleitet werden können.

Beispielsweise weist die z.B. als Träufelanlage ausgebildete Imprägnieranlage wenigstens einige der Anlagenkomponenten Träufeleinrichtung, Geliereinrichtung und Aushärteeinrichtung auf.

Vorzugsweise weist die Imprägnieranlage eine Handlingseinheit zum Beladen, Entladen oder Umsetzen von Statoren auf. Bei einigen Ausführungsformen ist die Handlingseinheit zum Erfassen je wenigstens eines Stators an dessen Innenumfang eingerichtet. Bei einigen Ausführungsformen ist die Handlingseinheit zum Ergreifen des wenigstens einen Halters eingerichtet.

Bei besonders bevorzugten Ausgestaltungen weist das Förderband Rolleinrichtungen auf, die zum drehenden Abstützen wenigstens einer Rollfläche an dem Stator oder dem Halter ausgebildet sind, wobei das Förderband zum Fördern der Statoren durch mehrere in Förderrichtung hintereinander angeordnete Anlagenkomponenten ausgebildet ist.

Vorzugsweise weist die Imprägnieranlage eine Beladestation auf, die zum batchweisen Auflegen einer Gruppe von in den Haltern gehaltenen Statoren auf das Förderband ausgebildet ist.

Bei besonders bevorzugten Ausgestaltungen sind unterschiedliche Anlagenkomponenten oder Bereiche der Imprägnieranlage auf mehrere Ebenen verteilt, so dass ein vorlaufendes Trum des Förderbandes für den Transport der Statoren in der einen Ebene ausgebildet ist und ein rücklaufendes Trum des Förderbandes für den Transport in einer weiteren Ebene ausgebildet ist. Beispielsweise ist eines der Trume insbesondere derart ausgebildet und angeordnet, dass die Statoren (eventuell eingespannt in insbesondere als Käfige ausgebildete Halter) darauf aufliegen und das Förderband somit unterhalb der Statoren angreift, und das andere Trum des Förderbandes ist derart ausgebildet und angeordnet, dass das Förderband oberhalb der Statoren angreift. Vorzugsweise läuft das vorlaufende Trum in einer oberen Ebene, so dass die Statoren darauf aufliegen und drehend antreibbar sind, und das rücklaufende Trum läuft in einer unteren Ebene, ohne gesonderten Drehantrieb für die Statoren.

Vorzugsweise sind Halter für die Statoren vorgesehen. Diese sind vorzugsweise so ausgebildet, dass der Stator am Außendurchmesser oder der äußeren Kontur aufgenommen oder aufgespannt wird. Vorzugsweise sind die Halter derart ausgebildet, dass beide axialen Seiten des Stators (Wickelkopfseiten) frei zugänglich sind.

Gemäß einem weiteren Aspekt schafft die Erfindung ein Imprägnierverfahren zum Imprägnieren von Statoren in Serienfertigung unter Verwendung einer Imprägnieranlage nach einem der voranstehenden Ausgestaltungen.

Bei einigen Ausführungsformen sind die Statoren während eines Träufelns und während eines Gelierens in einer jeweiligen Halterung eingespannt.

Bei einigen Ausführungsformen werden die Statoren vom Träufeln ins Gelieren mit der Transporteinrichtung/dem Fördersystem bei gleichzeitigem Aufrechterhalten der Drehung um die horizontalliegende Drehachse transportiert (keine Unterbrechung der Rotation). Bei einigen Ausführungsformen ist die eine Ebene eine Träufel- und Gelierebene, wo ein Träufeln und ein Gelieren stattfinden.

Bei einigen Ausführungsformen ist die Transporteinrichtung derart ausgebildet, dass die Statoren direkt quer zur Statordrehachse der Transporteinrichtung zugeführt und von dieser entnommen werden können, um z.B. nach oben zum Träufeln und Schwenken ausgehoben zu werden.

Bei einigen Ausführungsformen ist zum Beladen und/oder Entladen an einer Beladestelle als Handlingseinheit ein Linearportal vorgesehen, mit dem wenigstens ein Stator oder vorzugsweise eine Gruppe von Statoren (Batch) quer zur Statorachse auf dem Förderband abgelegt und/oder von diesem quer zur Statorachse abgehoben werden können.

Die Statoren müssen zum Be- und Entladen nicht axial bewegt werden. Die Wickelkopfseiten sind besser zugängig.

Die Transporteinrichtung ist bei Ausführungsformen der Erfindung derart ausgebildet, dass zur Fixierung des Stators auf dem Fördersystem kein aktives Klemmen oder Betätigen erforderlich ist, d.h. keine Aktorik.

Bei einigen Ausführungsformen ist das Fördersystem - die Transporteinrichtung, insbesondere für den Transport vom Träufeln zum Gelieren - als ein Umlaufsystem ausgebildet, welches in der Lage ist, auch die Statoren umlaufend zu transportieren.

Einer der Vorteile eines solchen Umlaufsystems ist, dass bei Ausfall oder Störung einer Komponente, z.B. falls das Beladesystem ausfällt, der Träufel- und Gelierprozess nicht unterbrochen werden muss, da die Statoren einfach im Umlauf weiter getaktet werden. Es gibt keinen Nachteil, wenn die Statoren die Anlage mehrmals durchlaufen, da in diesem Fall einfach der Träufelprozess "Trocken", d.h. ohne Zugabe von Harz ausgeführt wird, und das nochmalige Erwärmen der Statoren zulässig ist.

Bei einigen Ausführungsformen erfolgt die Rückförderung mit dem umlaufenden Förderband. Bei anderen Ausführungsformen ist ein erstes Förderband für die Förderung durch die Vorlaufbereich und ein zweites Förderband für die Förderung durch den Rücklaufbereich der Transportbahn vorgesehen.

Bei einigen Ausführungsformen werden die Statoren mit der Transporteinrichtung an den ursprünglichen Beladeort zurücktransportiert, d.h. mit anderen Worten, eine Beladestation ist auch zum Entladen ausgebildet; oder Beladen und Entladen der Statoren finden am gleichen Ort statt.

Bei einigen Ausführungsformen erfolgt die Rückförderung bevorzugt in einer vertikal versetzten Ebene, an der ein weiterer Aushärteprozess in einem Ofen erfolgt (im Weiteren auch als Aushärteebene oder Rückförderungsebene benannt).

Bei einigen Ausführungsformen befindet sich einer der Umlenkbereiche, insbesondere von einer Träufel- und/oder Gelierebene zu einer Aushärte- und/oder Rückförderungsebene, ebenfalls in dem oder in einem weiteren Ofen.

Bei einigen Ausführungsformen wird während der Überführung des Stators zwischen den Ebenen auf die Drehbewegung (insbesondere aktives Antreiben eines Drehens der Statoren) verzichtet. Insbesondere ist dies dann vorgesehen, wenn die Statoren bereits angeliert sind und die Überführung in oder nach einem Aushärtebereich erfolgt.

Bei einigen Ausführungsformen wird auf die Drehbewegung (insbesondere auf aktives Antreiben eines Drehens der Statoren) in dem Rücklaufbereich, insbesondere in einer unteren Ebene - z.B. Aushärtebereich - verzichtet.

Bei einigen Ausführungsformen ist die Rückförderung der Statoren im Rücklaufbereich mit dem in dem Vorlaufbereich aktiven Förderband mechanisch gekoppelt. Beispielsweise sind in dem Rücklaufbereich, wie z.B. auf der Rückförderungsebene nur entsprechende Leitelemente vorgesehen.

Bei einigen Ausführungsformen wird zum Zurückrollen der Statoren im Rücklaufbereich das in dem Vorlaufbereich aktive Förderband mit verwendet. Insbesondere werden an dem Förderband angeordnete Rollen auch zum Angreifen an den Statoren zum Rücktransport mit verwendet.

Bei einigen Ausführungsformen ist das Förderband derart ausgebildet und angeordnet, dass es zumindest auch in einem der Umlenkbereiche an den Statoren angreift, so dass es - z.B. zusammen mit Leitelementen, insbesondere Leitelementen, die eine Umlenkkurve bilden - zum Umlenken mit verwendet wird. Insbesondere werden die an dem Förderband angeordneten Rollen beim Überführen zwischen Ebenen der Imprägnieranlage zum Transport verwendet.

Bei einigen Ausführungsformen ist die Drehbewegung der Statoren auf einen Träufel- und Gelierbereich begrenzt. Dabei ist mit der "Drehbewegung" insbesondere eine gesondert angetriebene Drehbewegung, also nicht nur ein Abrollen auf einer Lauffläche bei einem Weitertakten gemeint.

Bevorzugte Ausführungsformen der Imprägnieranlage weisen ein Umlaufsystem auf, das eine Transporteinrichtung mit Förderband auf einer Träufel- und Gelierebene aufweist, welches dazu eingerichtet ist, die Statoren vom Träufelbereich in den Gelierbereich zu takten und dabei mindestens zwischen Träufel- und Gelierbereich um die eigene horizontalliegende Drehachse zu drehen, wobei Umlenksysteme an jedem Ende vorgesehen sind, welche dazu eingerichtet sind, die Statoren, insbesondere mittels Förderelementen der Transporteinrichtung - mehr insbesondere mittels des Förderbandes - in eine weitere Ebene zu takten, wobei eine Rückförderungsebene vorgesehen ist, wobei die Transporteinrichtung dazu eingerichtet ist, die Statoren mittels der Förderelemente - insbesondere mittels des Förderbandes - durch die Rückförderungsebene weiter zu takten, wobei die Transporteinrichtung derart ausgebildet ist, das die Statoren ohne Lösen von Klemmeinrichtungen quer zur Statorlängsachse be- und entladen werden können.

Ausführungsbeispiele werden im Folgenden anhand der beigefügten Zeichnungen näher erläutert. Darin zeigt:
- Fig. 1: eine schematische Vorderansicht als Übersichtsdarstellung einer bevorzugten Ausführungsform einer insbesondere als Träufelanlage ausgebildeten Imprägnieranlage mit mehreren Anlagenkomponenten einschließlich einer als Umlaufsystem ausgebildeten Fördereinheit einer Transporteinrichtung;
- Fig. 2: eine Draufsicht auf die Fördereinheit der Transporteinrichtung der Imprägnieranlage von oben in Fig. 1;
- Fig. 3: die Vorderansicht der Imprägnieranlage von Fig. 1, wobei zusätzlich ein Ofen und unterschiedliche Funktionsbereiche davon dargestellt sind;
- Fig. 4: eine Seitenansicht von rechts in Fig. 1 auf einen Stator, der in einem Halter gehalten und auf der Transporteinrichtung transportiert wird, zusammen mit einer Rolleinrichtung einer Anlagenkomponente, worauf der Halter abgelegt ist;
- Fig. 5: eine Vorderansicht auf die in Fig. 4 gezeigte Anordnung von links in Fig. 4 gesehen;
- Fig. 6a-6c: Seitenansichten einer Anordnung von zwei benachbarten Haltern mit Stator auf der Rolleinrichtung gemäß Fig. 4 und 5 zusammen mit einer als Aushebeeinrichtung ausgebildeten Rolleinrichtung einer weiteren Anlagenkomponente, insbesondere einer vorzugsweise als Träufeleinrichtung ausgebildeten Imprägniereinrichtung, bei unterschiedlichen Stadien eines Aushebens der Halter mit Statoren;
- Fig. 7a-7c: die Situationen der Fig. 6a-6c in Vorderansicht jeweils von links in Fig. 6a bis 6c gesehen;
- Fig. 8a-8c: Seitenansichten wie in Fig. 6a-6c, wobei drei auf die Situation von Fig. 6c folgende Stadien bei einem Imprägnieren der Statoren dargestellt sind, die mit der als Aushebeeinrichtung ausgebildeten Rolleinrichtung an einem Imprägnierbereich der Imprägnieranlage ausgehoben und zum Imprägnieren verschwenkt werden;
- Fig. 9: eine Draufsicht auf eine weitere Ausführungsform der Fördereinheit der Transporteinrichtung während vier aufeinanderfolgender Stadien, die untereinander dargestellt sind;
- Fig. 10: eine Vorderansicht auf eine weitere Ausführungsform der Imprägnieranlage mit einer weiteren Ausführungsform der Transporteinrichtung;
- Fig. 11a-11f: Vorderansichten eines Bereichs einer weiteren Ausführungsform der Imprägnieranlage mit als Aushebeeinrichtung ausgebildeter Rolleinrichtung an dem Imprägnierbereich während sechs aufeinanderfolgenden Stadien des Verfahrens;
- Fig. 12: das Detail XII aus Fig. 11c;
- Fig. 13: eine Schnittdarstellung durch eine konkrete Ausführungsform einer Imprägnieranlage;
- Fig. 14: eine Draufsicht der Imprägnieranlage von Fig. 13;
- Fig. 15: eine perspektivische isometrische Ansicht der Imprägnieranlage von Fig. 13 und 14;
- Fig. 16: eine perspektivische Ansicht einer derzeit bevorzugten Ausführungsform eines Halters zum Halten je eines Stators beim Handhaben desselben in der Imprägnieranlage, wobei ein darin beispielsweise eingespannter Stator mit gestrichelten Linien angedeutet ist;
- Fig. 17: eine Seitenansicht des Halters von Fig. 16 mit angedeutetem Stator zusammen mit einer dazu passenden Ausführungsform der Rolleinrichtung von einer der Anlagenkomponenten der Imprägnieranlage;
- Fig. 18: eine axiale Draufsicht auf einen sich in einem Imprägnierbereich der Imprägnieranlage befindlichen Stator zur Verdeutlichung der idealen Positionierung von Träufeldüsen bei einer Träufelimprägnierung;
- Fig. 19: den Schnitt entlang der Linie A-A von Fig. 18 zur Verdeutlichung der idealen Position von Träufeldüsen;
- Fig. 20: ein vergrößertes Detail von Fig. 18;
- Fig. 21: einen Schnitt entlang einer axialen Ebene durch einen sich in einem geschwenkten Zustand befindlichen Stator in einem Imprägnierbereich bei einer Ausführungsform eines Imprägnierverfahrens;
- Fig. 22: eine Seitenansicht auf den Stator in der Situation von Fig. 21; und
- Fig. 23a, 23b: Ansichten wie in Fig. 21, wobei ein Träufeln mit zwei Träufeldüsen in beiden Schwenkrichtungen dargestellt ist.

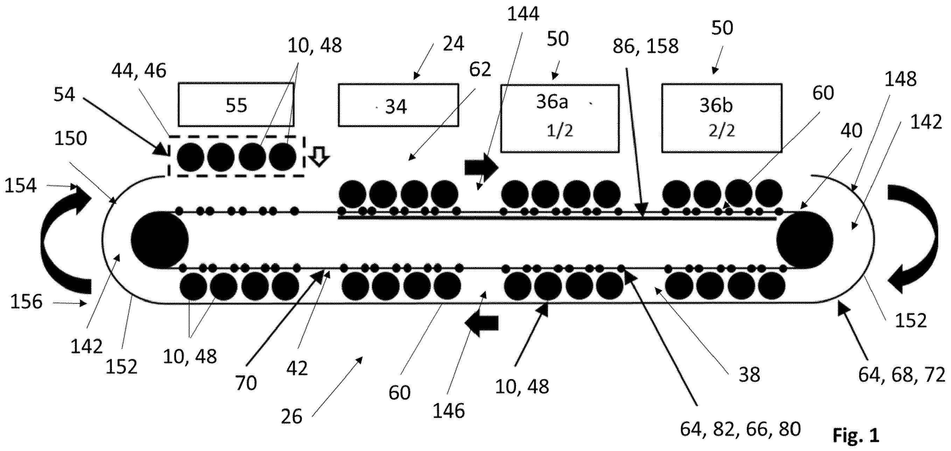

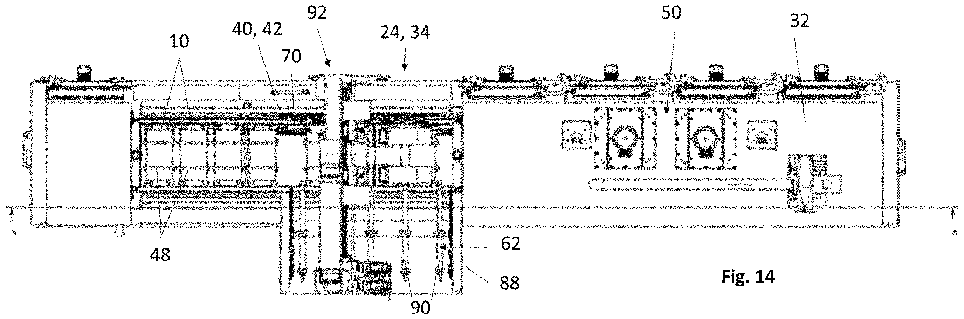

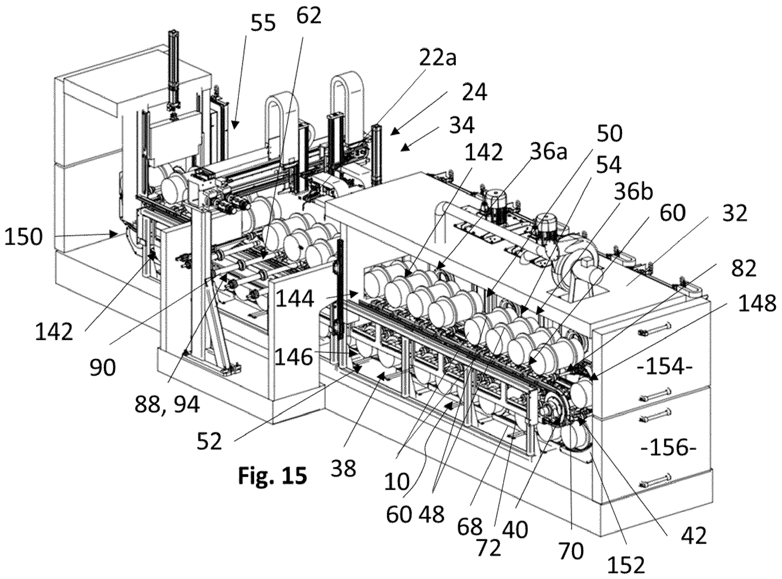

In den Figuren 1 bis 15 sind unterschiedliche Ausführungsformen einer Imprägnieranlage 26 zum Imprägnieren von Statoren 10 in Serienfertigung dargestellt.

In den dargestellten Ausführungsformen ist die Imprägnieranlage 26 als Träufelanlage ausgebildet, wobei eine in einem Imprägnierbereich 34 angeordnete Imprägniereinrichtung 24 als Träufeleinrichtung mit Träufeldüsen 22a-22d zur Träufelimprägnierung der Statoren 10 ausgebildet ist. Die hier dargestellten Prinzipien der Imprägnieranlage 26 lassen sich aber auch auf andere Imprägniertechniken übertragen.

Die Imprägnieranlage 26 ist zum Imprägnieren von Statoren 10 in Serienfertigung ausgebildet und weist eine Transporteinrichtung 40 zum Transportieren einer Reihe von Statoren 10 durch Bereiche 34, 36a, 36b, 38, 55 der Imprägnieranlage 26 auf.

Die Transporteinrichtung 40 weist eine umlaufende Transportbahn 142 mit einem Vorlaufbereich 144 und einem Rücklaufbereich 146 sowie Umlenkbereichen 148, 150 dazwischen und ein Förderband 42 auf.

Das Förderband 42 ist dazu ausgebildet, dass die Statoren 10 quer zur jeweiligen Statorachse auf dem Förderband 42 abgelegt oder abgehoben werden können und beim Transport durch den Vorlaufbereich 144 oder Rücklaufbereich 146 zumindest abschnittsweise drehend auf dem Förderband 42 aufliegen.

Bei einigen Ausführungsformen ist das Förderband 42 in dem Vorlaufbereich 144 unterhalb der Statorachsen der sich im Betrieb in dem Vorlaufbereich 144 befindlichen Statoren 10 angeordnet, so dass die Statoren 10 auf dem Förderband 42 aufliegend durch den Vorlaufbereich 144 der Transportbahn 142 transportierbar sind.

Bei einigen Ausführungsformen weist die Transporteinrichtung 40 in dem Rücklaufbereich 146 eine Lauffläche 72 zum Aufliegen der durch den Rücklaufbereich 146 zu transportierenden Statoren 10 auf. Beispielsweise ist die Lauffläche 72 an Schienen 68 oder sonstigen Führungselementen 64 ausgebildet.

Bei einigen Ausführungsformen ist das Förderband 42 in dem Rücklaufbereich 146 oberhalb der sich im Betrieb in dem Rücklaufbereich 146 befindlichen Statoren 10 angeordnet und dazu eingerichtet, die Bewegung der auf der Lauffläche 72 abrollenden Statoren 10 anzutreiben.

Bei den dargestellten Ausführungsformen ist an einem Anfang des Vorlaufbereichs 144 der umlaufenden Transportbahn 142 eine Be- und Entladestelle 55 angeordnet und so ausgebildet, dass die Statoren 10 quer zur Statorachse auf dem Förderband 42 abgelegt und davon abgehoben werden können.

Bei den dargestellten Ausführungsformen weisen die Umlenkbereiche 148, 150 Umlenkkurven 152 zum Erfassen der Statoren 10 und Umlenken derer Bewegungsbahnen auf.

Bei einigen Ausführungsformen sind die Bereiche 34, 36a, 36b, 38, 55 der Imprägnieranlage 26 auf mehreren Ebenen 154, 156 vorgesehen. Beispielsweise sind der Imprägnierbereich 34 und ein Gelierbereich 36a, 36b auf einer ersten Ebene 154, vorzugsweise einer oberen Ebene, vorgesehen, während ein Aushärtebereich 38 auf einer zweiten Ebene 156, vorzugsweise einer unteren Ebene vorgesehen sind.

Insbesondere ist vorgesehen, dass der Vorlaufbereich 144 und der Rücklaufbereich 146 übereinander angeordnet sind. Vorzugsweise ist der Vorlaufbereich 144 über dem Rücklaufbereich 146 angeordnet.

Bei den dargestellten Ausführungsformen führt der Vorlaufbereich 144 der Transportbahn 142 durch den Imprägnierbereich 34 und den Gelierbereich 36a, 36b der Imprägnieranlage 26, wobei in dem Imprägnierbereich 34 und dem Gelierbereich 36a, 36b ein Drehantriebsgetriebe 158 zum Antreiben einer Drehbewegung der auf dem Förderband 42 liegenden Statoren 10 vorgesehen ist.

Bei den dargestellten Ausführungsformen führen der Rücklaufbereich 146 und/oder wenigstens einer oder beide der Umlenkbereiche 148, 150 durch den in Transportrichtung nach dem Gelierbereich 36a, 36b liegenden Aushärtebereich 38 der Imprägnieranlage 26.

Bei den dargestellten Ausführungsformen weist das Förderband 42 weiter wenigstens ein umlaufendes Zugmittel - wie insbesondere eine Transportkette 70 - sowie daran angebrachte Rollen 66 oder Walzen 82 zum rollenden Aufliegen der Statoren 10 auf. Die Rollen 66 oder Walzen 82 sind um sich quer zur Transportrichtung verlaufende Drehachsen drehbar.

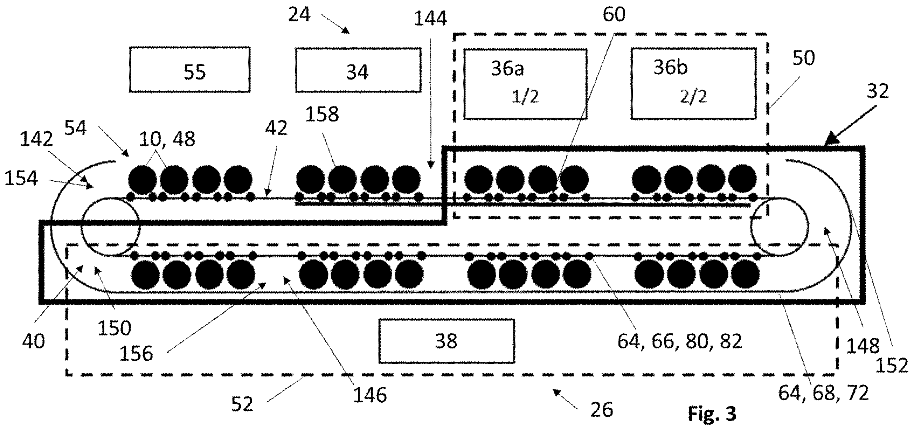

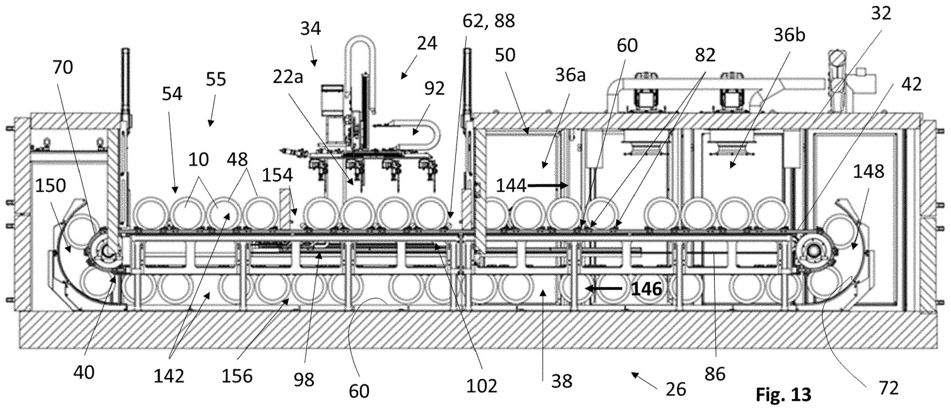

Ein erstes Ausführungsbeispiel für die z.B. als Träufelanlage ausgebildete Imprägnieranlage 26 ist in Fig. 1 schematisch ohne und in Fig. 3 mit Ofen 32 und in den Fig. 13-15 in einer möglichen Detailausführung detaillierter dargestellt. Die Imprägnieranlage 26 weist als Anlagenkomponenten die z.B. als Träufeleinrichtung ausgebildete Imprägniereinrichtung 24 mit dem z.B. als Träufelbereich ausgebildeten Imprägnierbereich 34, eine Geliereinrichtung 50 mit einem ersten Gelierbereich 36a und einem zweiten Gelierbereich 36b, eine Aushärteeinrichtung 52 mit dem Aushärtebereich 38 und die Transporteinrichtung 40 auf.

Insbesondere Statoren 10 mit zylindrischer Außenfläche können in der Imprägnieranlage 26 auch unmittelbar gehandhabt werden. Bei der bevorzugten Ausgestaltung ist eine Reihe von Haltern 48 vorgesehen, die dazu ausgebildet sind, jeweils einen Stator 10 zu halten. Durch die Verwendung von Haltern 48, von denen bevorzugte Ausgestaltungen noch später näher erläutert werden, können insbesondere auch Statoren 10 mit nicht zylindrischer Außenfläche gehandhabt werden. Die Imprägnieranlage 26 weist weiter einen Belade- und Entladeplatz oder eine Belade- und Entladestelle 55 (Station zum Beladen und Entladen) auf.

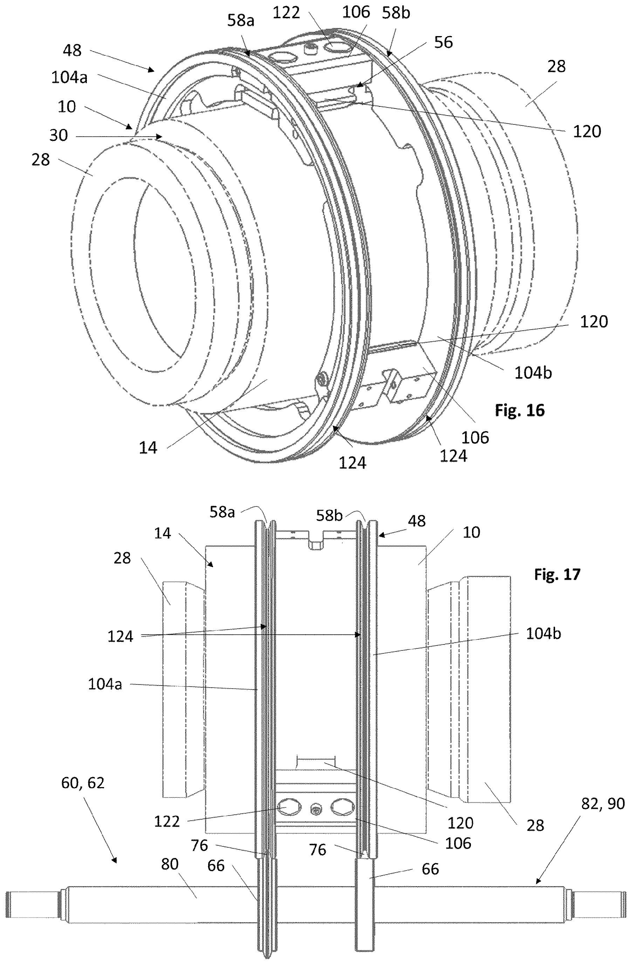

Der jeweilige Halter 48, der in Fig. 16 und 17 in größerem Detail dargestellt ist, ist zum Halten, Drehen und Transportieren je eines Stators 10 im Zuge eines Imprägnierens des Stators 10 mit Harz ausgebildet. Der Halter 48 weist eine Spanneinrichtung 56 zum Einspannen des Stators 10 und wenigstens eine Rollfläche 58a, 58b zum rollenden Abstützen des sich drehenden Halters 48 mit eingespanntem Stator 10 auf.

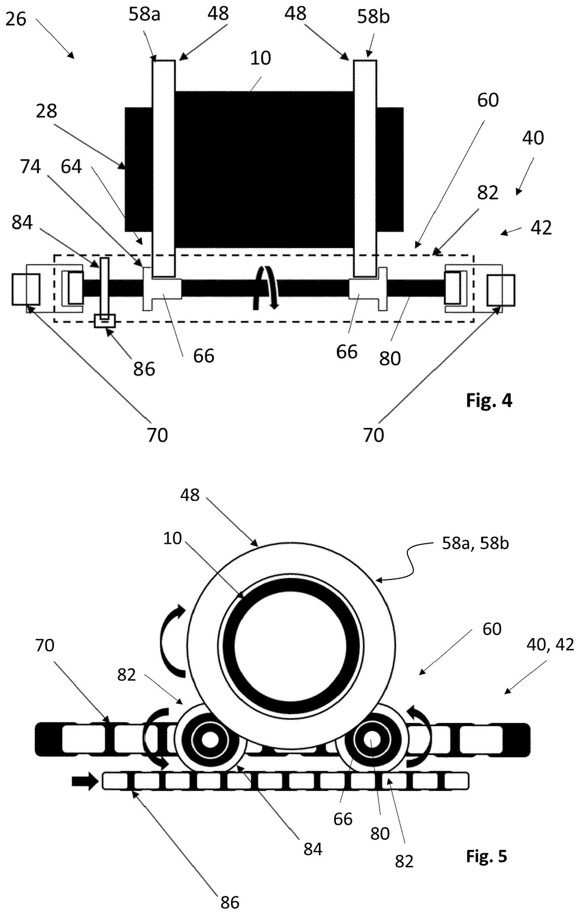

Der Halter 48 mit eingespanntem Stator 10 wird in der Geliereinrichtung 50 zum Gelieren allein durch Schwerkraft dadurch gehalten, dass die wenigstens eine Rollfläche 58a, 58b auf einer in den Fig. 4 und 5 dargestellten Rolleinrichtung 60 der Geliereinrichtung 50 aufgelegt wird. Mit der wenigstens einen auf der Rolleinrichtung 60 aufliegenden Rollfläche 58a, 58b wird der Halter 48 mit Stator 10 in dem Gelierbereich 36a, 36b um die mit einer Mittelachse des Stators 10 zusammenfallende Drehachse gedreht.

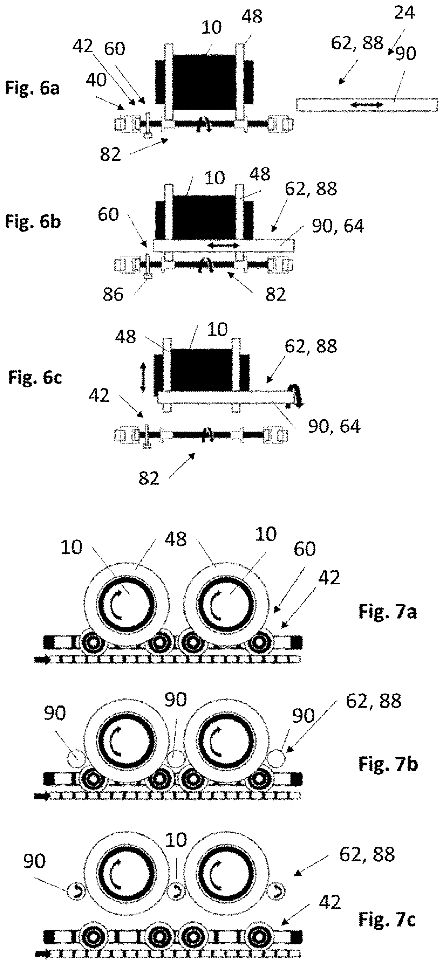

Auch in der Imprägniereinrichtung 24 wird der Halter 48 mit eingespanntem Stator 10 zur Imprägnierung, insbesondere Träufelimprägnierung, durch Auflage der wenigstens einen Rollfläche 58a, 58b auf einer in den Fig. 7b-8c dargestellten Rolleinrichtung 62 der Imprägniereinrichtung 24 allein durch Schwerkraft gehalten und um die mit der Mittelachse des Stators 10 zusammenfallende Drehachse gedreht.

Die jeweilige Rolleinrichtung 60, 62 weist mehrere Führungselemente 64 auf, auf denen die wenigstens eine Rollfläche 58a, 58b abgesetzt wird. Die Führungselemente 64 sind dazu eingerichtet, den Halter 48 - oder bei einem Stator 10 mit zylindrischer Außenfläche, an dem die wenigstens eine Rollfläche 58a, 58b an dem Stator 10 selbst ausgebildet ist, den Stator 10 selbst - so zu führen, dass dieser eine konzentrische Drehung um seine Mittelachse/Längsachse ausführt. Bei einigen Ausführungsformen sind die Führungselemente 64 zur seitlichen Führung so ausgebildet, dass der Stator 10/Halter 48 auch beim Drehen seine axiale Lage (Lage in axialer Richtung, d.h. in Richtung der Statorachse/Mittelachse) beibehält.

Die Führungselemente 64 der jeweiligen Rolleinrichtung 60, 62 sind jeweils komplementär zur Ausbildung der wenigstens einen Rollfläche 58a, 58b ausgebildet. Beispiele für die Führungselemente 64 sind Rollen 66, Ritzel, Konturräder, Verzahnungen, Schienen 68, (Umlauf-)Ketten, wie insbesondere Transportketten 70 oder dergleichen Zugmittel, insbesondere Endloszugmittel, Laufflächen 72, Rollen 66 mit Bordscheiben 74, Rollen mit V-Nuten, Rollen mit balliger Lauffläche, Rollen 66 mit Ringvorsprung 76 an der Lauffläche, Rollen mit Rillen an der Lauffläche, mittels einer Kette, wie insbesondere einer Transportkette 70, oder dergleichen Zugmittel oder dem Förderband 42 verbundene Rollen, aktiv angetriebene Rollen, aktiv angetriebene Ritzel und durch eine gemeinsame Welle 80 verbundene Rollen, Ritzel oder Konturräder.

Wie man insbesondere Fig. 4 und 5 und Fig. 7a-7c entnehmen kann, weisen Aufnahmebereiche an dem Förderband 42 jeweils eine erste bis vierte Rolle 66 zum Angreifen an einem Stator 10 auf, wobei die erste und zweite Rolle 66 axial beabstandet zueinander angeordnet sind und an wenigstens einer Rollfläche 58a, 58b des zylindrischen Stators 10 oder eines den Stator 10 haltenden Halters 48 in einer Winkelstellung zwischen 3 Uhr und 6 Uhr anzugreifen. Die dritte und vierte Rolle sind ebenfalls axial beabstandet zueinander und derart angeordnet, dass sie an der wenigstens einen Rollfläche 58a, 58b in einer Winkelstellung zwischen 6 Uhr und 9 Uhr angreifen.

Gemäß Fig. 7b und 7c weist die Rolleinrichtung 62 der Aushebeeinrichtung 88 benachbarte Auflageplätze für einen ersten und einen zweiten Stator 10 auf, wobei zwischen den Aufnahmeplätzen eine gemeinsame Welle 90 oder Rolle angeordnet ist, die dazu ausgebildet ist, dass der erste und zweite Stator darauf aufliegen, so dass eine Drehung des einen Stators über die gemeinsame Welle oder Rolle auf den zweiten Stator übertragbar ist oder dass der erste und zweite Stator über die gemeinsame Welle oder Rolle drehend angetrieben werden.

Bei nicht dargestellten Ausführungsformen kann auch die Rolleinrichtung 60 der Transporteinrichtung 40 wie diese Rolleinrichtung 62 der Aushebeeinrichtung 88 ausgebildet sein. Das Förderband 42 weist dann wie bei Fig. 7b und 7c für die Aushebeeinrichtung 88 dargestellt benachbarte Auflageplätze für einen ersten und einen zweiten Stator auf, wobei zwischen den Aufnahmeplätzen eine gemeinsame Welle oder Rolle angeordnet ist, die dazu ausgebildet ist, dass der erste und zweite Stator darauf aufliegen, so dass eine Drehung des einen Stators über die gemeinsame Welle oder Rolle auf den zweiten Stator übertragbar ist oder dass der erste und zweite Stator über die gemeinsame Welle oder Rolle drehend angetrieben werden.

Im Folgenden wird die Transporteinrichtung 40 der Imprägnieranlage 26 gemäß der ersten Ausführungsform anhand der Darstellung in den Fig. 1 bis 5 näher erläutert.

Die Transporteinrichtung 40 ist als Umlaufsystem ausgestaltet und stellt somit die Rolleinrichtung 60 bereit, auf der die in den jeweiligen Haltern 48 gehaltenen Statoren 10 auf der Be- und Entladestelle 55 mit der wenigstens einen Rollfläche 58a, 58b rein durch Schwerkraft abgestützt werden und die aufgrund ihres umlaufenden Verlaufs auch in der Geliereinrichtung 50 und der Aushärteeinrichtung 52 vorgesehen ist.

Zum Bilden der Rolleinrichtung 60 weist die Transporteinrichtung 40 das Förderband 42, insbesondere in Form einer umlaufenden Transportkette 70, mit sich mit ihrer Drehachse quer zur Förderrichtung erstreckenden Rollen 66, sowie Schienen 68 oder sonst wie ausgebildete Laufflächen 72 auf. Die Rollen 66 sind mit Maßnahmen zum Positionieren und Führen der Halter 48 in der Querrichtung versehen, z.B. Bordscheiben 74 (siehe Fig. 4) oder Ringvorsprünge 76 (siehe Fig. 17) oder dergleichen.

Ein erstes Trum des Förderbandes 42 läuft in einem oberen Bereich - der ersten Ebene 154 - der Imprägnieranlage 26, wo sich in Förderrichtung gesehen zunächst die Be- und Entladestelle 55, dann die Imprägniereinrichtung 24 und dann der erste Gelierbereich 36a und dann der zweite Gelierbereich 36b der Geliereinrichtung 50 befindet.

In diesem oberen Bereich liegt zum Transport die wenigstens eine Rollfläche 58a, 58b des Halters 48 auf zwei in Förderrichtung benachbarten Wellen 80 mit Rollen 66 auf, wie dies in Fig. 1 bis 5 dargestellt ist.

Dann wird das Förderband 42 umgelenkt, und ein zweites Trum des Förderbandes 42 befindet sich in einem unteren Bereich - der zweiten Ebene 156 - der Imprägnieranlage 26 oberhalb der Statoren 10, bis das Förderband 42 am anderen Ende wieder nach oben umgelenkt wird. An den Umlenkbereichen 148, 150 und im unteren Bereich sind die Schienen 68 oder die sonstige Lauffläche 72 vorgesehen, auf denen die wenigstens eine Rollfläche 58a, 58b aufliegt, so dass die Statoren 10 - mit ihren zylindrischen Außenflächen oder in ihren Haltern 48 - durch die im unteren Bereich ausgebildete Aushärteeinrichtung 52 geführt werden und anschließend wieder nach oben zu der Be- und Entladestelle 55 geführt werden. Dabei greifen die Rollen 66 des Förderbandes 42 oben am Halter 48 (oder Statoren 10) an und treiben so die Transportbewegung an. Bei anderen, hier nicht näher dargestellten Ausführungsformen wird die Transportbewegung in dem Rücklaufbereich 146 einfach durch Weiterschieben der im Vorlaufbereich 144 durch das Förderband 42 bewegten Statoren 10 angetrieben.

Das dargestellte Ausführungsbeispiel der Imprägnieranlage 26 mit ihren unterschiedlichen Anlagenkomponenten ist als Umlaufsystem ausgeführt, das bevorzugt als Kettenumlauf gestaltet wird.

Das Umlaufsystem ist dabei in die einzelnen Applikationsschritte Be-/Entladen, Träufeln und Gelieren aufgeteilt, welche gleichzeitig erfolgen können.

Es können sich pro Arbeitsschritt mehrere Statoren 10 - insbesondere mit als Käfige ausgeführten Haltern 48 - im Umlaufsystem befinden, damit eine hohe Auslastung erreicht wird. Beispielsweise befindet sich jeweils ein Batch 54 von mehreren Statoren 10 in jeder der Anlagenkomponenten; im Beispiel ist jeweils ein Batch 54 von vier Statoren 10 dargestellt.

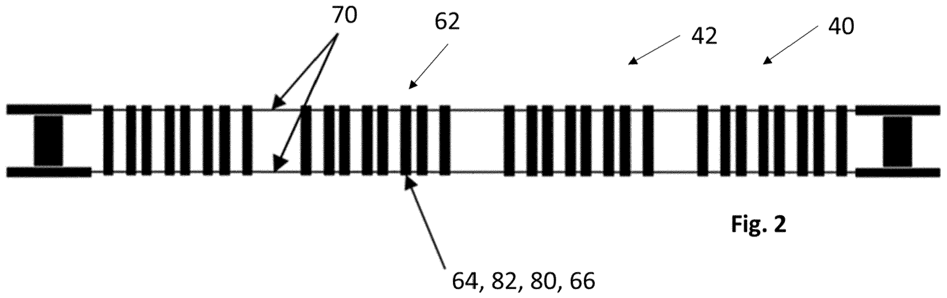

In Fig. 1 ist schematisch ein Grundgedanke der Imprägnieranlage 26 dargestellt. Die Statoren/Käfige/Halter 10, 48 werden radial von oben beladen und liegen dann rein schwerkraftbedingt auf den Wellen 80 der umlaufenden Transportkette 70 ab. Die Wellen 80 werden, wie dies in Fig. 2 dargestellt ist, bevorzugt zwischen zwei Transportketten 70 angebracht, wodurch eine relativ einfache und kostengünstige Konstruktion erreicht wird. Je nach Anforderung ist es auch möglich, das Umlaufsystem mit mehr als nur einem Gelierplatz - hier sind ein erster und zweiter Gelierbereich 36a, 36b angedeutet - auszustatten und die Imprägnieranlage 26 modular aufzubauen. Fig. 3 zeigt die Imprägnieranlage 26 zusammen mit dem Ofen 32, der sich über die Geliereinrichtung 50 und die Aushärteeinrichtung 52 erstreckt.

Damit das Harz der Statoren 10 nicht ausläuft, ist bei der Imprägnieranlage 26 vorgesehen, dass diese während des Imprägnierens (insbesondere Träufelns) und des Gelierens rotieren. Ein Ausführungsbeispiel für einen Drehantrieb mit Drehantriebsgetriebe 158 zum Antreiben eines solchen Rotierens wird im Folgenden anhand der Darstellung in den Fig. 1, 4 und 5 erläutert.

Die als Aufnahmewalzen 82 dienenden Wellen 80 sind bevorzugt mit einem Ritzel 84 oder dergleichen ausgeführt. Dadurch kann hier mit nur einem Antrieb und einer Antriebskette 86 oder dergleichen Drehantriebsgetriebe 158 jeder Halter 48/Stator 10 in diesem Bereich dauerhaft in Rotation versetzt werden. Die Antriebskette 86 für die Rotation wird unabhängig von der Transportkette 70 angetrieben. Die Unabhängigkeit der Antriebskette 86 von der Transportkette 70 bewirkt, dass beim Weitertransport von z.B. Träufeln zu Gelieren, beziehungsweise beim Stillstand der Transportkette 70, die Rotation beibehalten wird, wie dies in Fig. 5 dargestellt ist.

Für einen kleineren Fußabdruck der gesamten Imprägnieranlage 26 ist bei einigen nicht dargestellten Ausführungsformen vorgesehen, den Gelierprozess in der oberen und unteren Ebene 154, 156, oder nur in der unteren Ebene durchzuführen. Dafür kann die Rotationskette 86, ähnlich wie die Transportkette 70 über beide Ebenen 154, 156, sowie um die Statoren in der Kulisse - Lauffläche 72 - des Umlenkpunktes geführt werden.

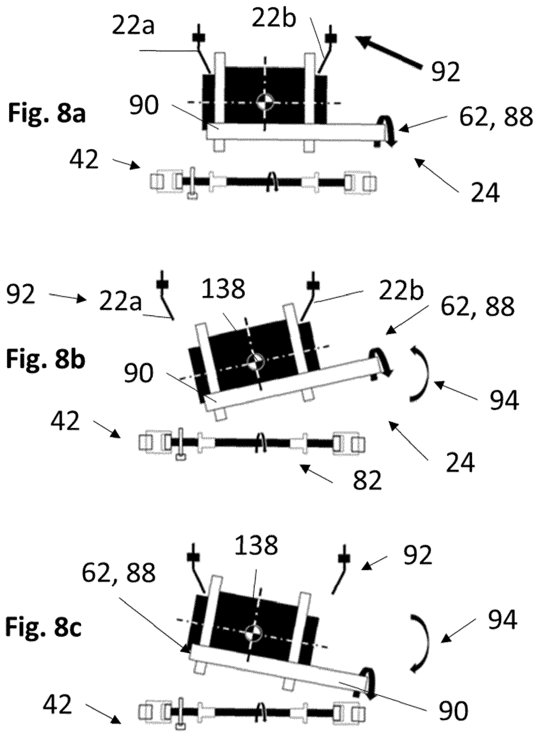

Im Folgenden wird anhand der Fig. 6a bis 8c ein Ausführungsbeispiel sowie die Funktion der hier als Aushebeeinrichtung 88 ausgeführte Rolleinrichtung 62 der Imprägniereinrichtung 24 beschrieben. Die Fig. 6a, 7a zeigen unterschiedliche Ansichten eines ersten Stadiums eines Aushebens, die Fig. 6b, 7b zeigen unterschiedliche Ansichten eines zweiten Stadiums des Aushebens, die Fig. 6c, 7c zeigen unterschiedliche Stadien eines dritten Stadiums des Aushebens und de Fig. 8a bis 8c zeigen unterschiedliche Stadien eines Verschwenkens der Aushebeeinrichtung 88.

Für eine Imprägnieranlage 26, die für jeweils n Statoren 10 pro Batch 54 ausgelegt ist, weist die als Aushebeeinrichtung 88 ausgebildete Rolleinrichtung 62 n+1 Aushebewellen 90 auf.

Die Aushebewellen 90 sind in Förderrichtung in vorbestimmten Abstand zueinander drehend antreibbar an einem nicht dargestellten Träger gelagert, der in der Imprägniereinrichtung 24 horizontal und vertikal quer zur Förderrichtung bewegbar ist und in unterschiedliche Schwenkrichtungen schwenkbar ist. Der vorbestimmte Abstand ist so bemessen, dass auf einer zwischen benachbarten Aufnahmeplätzen für die Statoren 1 0/Halter 48 vorgesehenen Aushebewelle 90 beide benachbarte Statoren 1 0/Halter48 auf derselben dazwischen angeordneten Aushebewelle 90 abrollen können.

Weiter weist die Imprägniereinrichtung 24 eine Träufeldüsenanordnung 92 mit Träufeldüsen 22a-22d auf, die beispielsweise an einer Portalanlage horizontal quer zur Förderrichtung bewegbar ist.

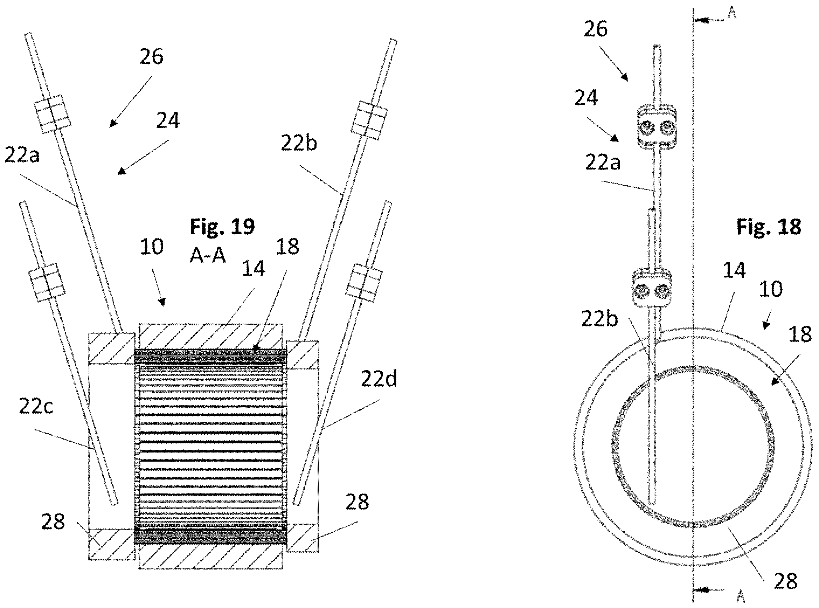

Das hierdurch durchführbare Träufeln wird im Folgenden anhand der Fig. 19 bis 23b näher erläutert. Dabei ist ein Stator 10 in dem als Träufelbereich ausgebildeten Imprägnierbereich 34 dargestellt.

Bei Statoren 10 mit hohem Wirkungsgrad und/oder hohen Leistungen und/oder hohen Schwingungen im Betrieb kann auf die Imprägnierung einer Wicklung 18 der Statoren 10 nicht verzichtet werden. Bei der Imprägnierung werden die Zwischenräume in Nuten 16 des Stators 10, welche prozessbedingt zwischen Wicklung 18, ggf. Nutisolation - z.B. Isolationspapier 20 -- und Blechpaket 14 vorhanden sind, mit Harz ausgegossen. Dieser zusätzliche oft unerlässliche Schritt verbessert z.B. die thermische Leitfähigkeit zwischen Wicklung 18 und Blechpaket 14, wodurch die Wärmeableitung verbessert und dadurch das Aggregat leistungsfähiger wird. Ein weiterer Vorteil der Imprägnierung ist die Fixierung der Wicklung 18, um bei Schwingungen eine Relativbewegung der Wicklung 18 zum Blechpaket 14 und somit Beschädigungen der Isolation der Wicklung 18 zu vermeiden. Noch ein Vorteil ist die zusätzliche Isolation der Wicklung 18 durch das Harz, was höhere Spannungen in der Wicklung 18 zulässt, die das Aggregat leistungsfähiger machen.

Generell kann gesagt werden, dass für elektrische Antriebe oder Generatoren mit hohen Leistungen und Wirkungsgraden eine Imprägnierung der Wicklung 18 sehr viele Vorteile bringt. Besondere Vorteile ergeben sich, wenn eine Verschmutzung von Innen- wie Außendurchmesser und auch Stirnflächen 30 des Blechpakets 14 möglichst vermieden werden.

Fig. 18 und 19 zeigen besonders gut geeignete Positionen der Träufeldüsen 22a-22d bei einer Träufelimprägnierung.

Bei dem Träufelverfahren wird das Harz in der Regel auf die überstehende Wicklung 18 geträufelt, und das Harz läuft, unterstützt durch die Kapillarwirkung, in die Nuten 16 des Stators 10, gleichzeitig wird der Stator 10 kontinuierlich um eine Drehachse gedreht, die in der Regel mit der Statorachse (Statorlängsachse, definiert die spätere Drehachse der mit dem Stator 10 versehenen elektrischen Maschine) zusammenfällt.

Beim Träufelverfahren wird in einigen Ausführungsformen vor dem Aufbringen des Harzes der Stator 10 auf eine Temperatur erwärmt, die normalerweise geringer als die Aushärtetemperatur des Harzes ist, üblicherweise zwischen 100-130°C, abhängig vom Harz. Bei einigen Ausführungsformen weisen die für die Statoren 10 verwendeten Imprägnierharze bei etwas höheren Temperaturen eine wesentlich geringere Viskosität auf, dadurch wird die Kapillarwirkung des Harzes während des Träufelvorgangs verbessert.

Die maximal mögliche Dosiergeschwindigkeit hängt vom Statordesign ab, d.h. es sollte nur so viel dosiert werden, wie aufgrund der Kapillarwirkung zu diesem Zeitpunkt in die Nuten 16 einzieht. Ist die Dosiermenge zu hoch, fließt Harz auch auf die Stirnflächen 30 des Stators 10, was unerwünscht ist.

Daher kann solch ein Träufelvorgang mehrere Minuten dauern, abhängig von Statordesign und Statorgröße.

Bei den erwähnten höheren Temperaturen für die dadurch verbesserte Kapillarwirkung beginnt jedoch das Harz nach einer gewissen Zeit zu gelieren, d.h. auszuhärten, daher sollte der Träufelvorgang nicht zu lange dauern. Daher wird üblicherweise auf beiden Enden der Wicklung 18, auch Wickelkopf 28 genannt, mit einer Dosiernadel - Beispiel für Träufeldüse 22a-22d - Harz auf die Wicklung 18 dosiert, so dass von beiden Seiten des Stators 10 gleichzeitig Harz in die Nuten 16 einziehen kann. Zur Reduzierung der Prozesszeit kann es auch von Vorteil sein, das Harz auf den Wickelkopf 28 mit mehreren Dosiernadeln aufzubringen.

Bei bestimmten Statordesigns, wie z.B. bei nach innen geschlossener Nutisolation, kann es bei einem gleichzeitigen Träufeln von beiden Statorseiten allerdings zu unerwünschten Lufteinschlüssen kommen. In solchen Fällen ist ein Träufeln von einer Seite zu bevorzugen, insbesondere in Kombination eines leichten Schwenkens der Drehachse des Stators 10 zur Horizontalen zur Unterstützung des Einziehens des Harzes aufgrund der Schwerkraft.

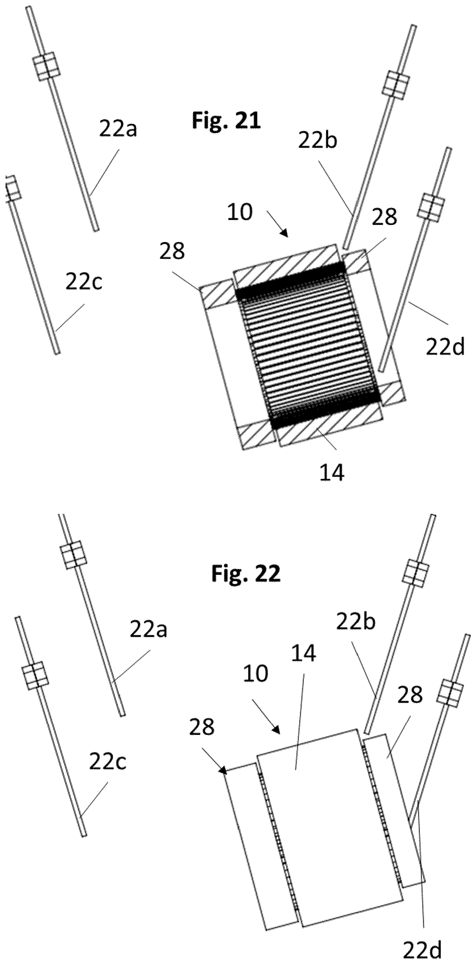

Dieses Schwenken des Stators 10 sollte jedoch nur temporär erfolgen, da sonst aufgrund der Schwerkraft das Harz auf der anderen Seite wieder aus der Nut 16 herausläuft, anschließend sollte die Drehachse des Stators 10 wieder in die Horizontale gebracht werden. Einige beispielhafte Schwenklagen des Stators 10 sind in den Fig. 21, 22, 23a und 23b dargestellt.

Bei größeren Statoren 10 - und somit größerer Nuttiefe im Blechpaket 14 - ist es oft vorteilhaft, dass das Harz nicht nur auf den Außendurchmesser am Wickelkopf 28 nahe des Blechpakets 14 aufgebracht wird, sondern auch auf der Innenseite des Blechpakets (siehe Fig. 18, 19, 21, 22, 23a, 23b).

Dieser Effekt ist besonders bei Statoren mit Flachdrahtwicklung vorhanden, wenn der Flachdraht der Wicklung 18 die ganze Nutbreite ausfüllt, d.h. der Flachdraht nahezu die Nutbreite hat, und somit ein Harzfluss quer zur Drahtrichtung behindert. Es sei hier erwähnt, dass bei Statoren 10 mit hohem Wirkungsgrad generell versucht wird, den Kupferfüllgrad in den Nuten 16 so hoch wie möglich zu gestalten. Bei Wicklungen 18 mit Runddraht gibt es genügend Hohlräume in der Nut 16, damit sich das Harz in alle Richtungen ausbreiten kann. Bei Wicklungen 18 mit Flachdraht, wo üblicherweise alle Flachdrähte axial ausgerichtet sind, und im Idealfall in der Breite wie in der Höhe die Nut 16 komplett ausfüllen, verbleiben im Prinzip nur toleranzbedingte Spalte zwischen den Leitern und dem Bereich der Eckradien der Leiter. Bei solchen Statoren 10 kann über die Spalte aufgrund der Leitereckradien das Harz in Längsrichtung in das Innere des Stators 10 laufen, jedoch ist ein Querfluss des Harzes stark eingeschränkt.

Somit ist es, insbesondere bei Statoren 10 mit Flachdrahtwicklung, oft vorteilhaft, dass auf einer Seite des Stators 10 am Außendurchmesser und am Innendurchmesser geträufelt wird. Dies kann z.B. durch eine erste und eine zweite Träufeldüse 22a, 22b gleichzeitig erfolgen, oder durch eine einzelne verfahrbare Träufeldüse 22a, die abwechselnd am Außen- und Innendurchmesser träufelt.

Je nach Statordesign kann es vorteilhaft sein, dass sogar auf beiden Seiten des Stators 10 jeweils am Innen-, wie auch am Außendurchmesser geträufelt wird.

Bei der Positionierung der Dosiernadel ist darauf zu achten, dass das Harz beim Dosieren möglichst nicht auf die Stirnseite des Blechpaketes 14 spritzt, welches z.B. bei kleinen Lufteinschlüssen im Harz erfolgen kann. Daher wird im Idealfall die Dosiernadel nicht gegen das Blechpaket 14 gerichtet, sondern so weit möglich parallel zur Blechpaket-Stirnfläche 30, also möglichst radial und somit rechtwinklig zur Wicklung 18.

Um einen möglichst hohen Harz-Füllgrad ohne ein Abtropfen eines Harzes vom Wickelkopf 28 zu erreichen, sollte das Harz möglichst nahe an die Nutöffnung dosiert werden, d.h. in nur sehr geringem Abstand zum Blechpaket 14.

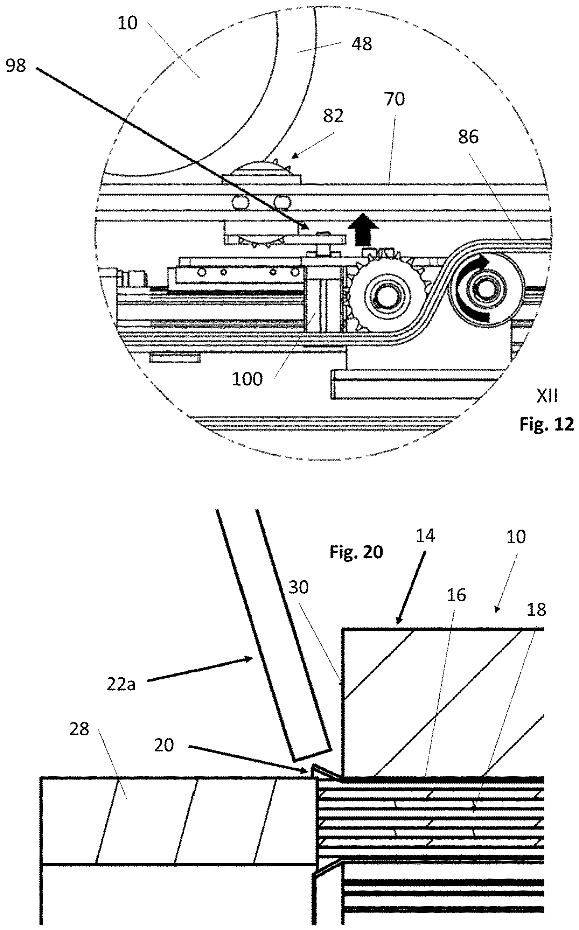

Hier erweist es sich als vorteilhaft, wenn das Harz, welches die Zwischenräume der Wicklung 18 und der Nutisolation - z.B. Isolationspapier 20 - füllen soll, direkt vor die Nutisolation in den Spalt zwischen Nutisolation und Wicklung 18 geträufelt wird, wie dies in Fig. 20 dargestellt ist. Dabei ragt die Nutisolation wie z.B. das Nutisolationspapier 20 bei solchen Statoren 10 üblicherweise zwischen 1mm und 7mm über die Stirnfläche 30 des Blechpakets 14 heraus.

Idealerweise wird hier der Winkel der Düsenspitze in Abhängigkeit der Wickelkopfseite jeweils angepasst, um auf diese Punkte träufeln zu können, oder es wird - wie in Fig. 20-23b dargestellt und oben bereits beschrieben - der Stator 10 temporär gekippt, was auch die entsprechende Änderung des Winkels zwischen Träufeldüse 22a-22d und Stirnfläche 30 des Blechpakets 14 bewirkt.

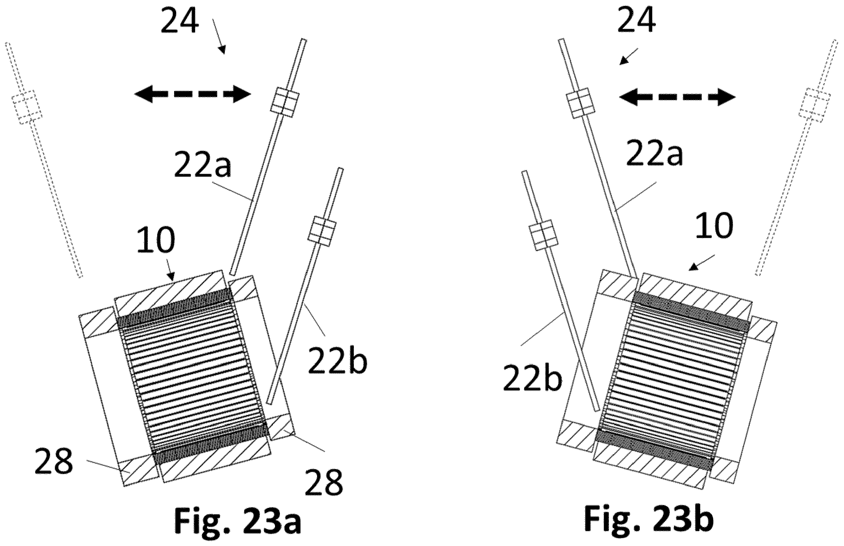

Die Fig. 21 und 22 zeigen hierbei das Träufeln mit einer ersten bis vierten Träufeldüse 22a-22d in einem ersten geschwenkten Zustand. Fig. 23a und 23b zeigen eine weitere Ausführungsform mit nur zwei Träufeldüsen 22a, 22b, die auf die eine oder die andere Seite des Stators 10 hin verfahrbar sind, wobei der Stator in Fig. 23a in der ersten Schwenkrichtung und in Fig. 23b in der zweiten Schwenkrichtung verschwenkt ist.

Wie sich aus den Darstellungen der Fig. 18 - 23b ergibt, ist es von Vorteil, wenn beide Wicklungskopfseiten zur Imprägnierung leicht zugänglich sind. Weiter ist von Vorteil, wenn die Transporteinrichtung 40 so gestaltet ist, dass möglichst wenige bewegliche Teile von auslaufendem Harz betroffen sein können.

Die Transporteinrichtung 40 ist vorzugsweise so gestaltet, dass der Stator 10 selbst - z.B. mit zylindrischer Außenfläche - oder in einem Halter 48, der eine gute Zugänglichkeit ermöglicht, leicht abgelegt und abgehoben werden können und dennoch die obigen Vorteile erzielbar sind.

Im Folgenden wird erneut auf die Fig. 6a bis 8c Bezug genommen. Wie bereits erwähnt ist es für ein besseres Träufelergebnis von Vorteil, wenn die Träufeldüsen 22a-22d von beiden Seiten des Stators 10, im Innen- und/oder Außendurchmesser und/oder mit einer leichten Neigung zur horizontalen Längsachse, das Harz auf den Wickelkopf 28 aufbringen.

Durch den kompakten Aufbau des Umlaufsystems ist es möglich, die Träufeldüsen 22a-22d beispielsweise von einer oder beiden Seiten, und sogar als Portalbauweise über den Haltern 48, zu zustellen. Zudem ermöglicht der insbesondere als Käfig ausgebildete Halter 48 durch die gute Zugänglichkeit des Stators 10, dass beispielsweise nur jeweils eine Träufeldüse 22a-22d für den Innen- und Außendurchmesser pro Statorseite, oder aber auch für den Innen und Außendurchmesser separate Träufeldüsen 22a-22d pro Statorseite verwendet werden.

Zum Ausheben und damit zum Schwenken des Stators 10 sind ebenfalls mehrere Varianten denkbar. Bei der dargestellten Ausführung können die insbesondere als Käfige ausgebildete Halter 48 mittels der Aushebewellen 90, die zwischen den Aufnahmewalzen 82 in axialer Richtung zugestellt werden, nach oben ausgehoben werden. Auch auf diesen Aushebewellen 90 werden die Halter 48 durch die Erdanziehungskraft und etwaigen Profilen/V-Nuten/Bordscheiben (hier nicht dargestellt, siehe beispielsweise Fig. 17 für eine mögliche Ausgestaltung der Aushebewellen 90) auf Position gehalten.

Durch einen separaten Antrieb der Aushebewellen 90 ist es möglich, die Halter 48 stehend oder drehend aufzunehmen und auch wieder stehend oder drehend abzulegen - siehe Fig. 6a-6c sowie 7a-7c. In den Fig. 7a-7c ist auch zu erkennen, dass die Aushebeeinrichtung 88 nur eine Aushebewelle 92 zwischen den Haltern 48 benutzt und keine zwei, im Vergleich zur Transportkette 70. Vorteil dabei ist, dass an der Aushebeeinrichtung 88 nur beispielsweise die erste Aushebewelle 90 angetrieben werden muss, um alle weiteren Aushebewellen 90 und Halter in Rotation zu versetzen, ohne diese Aushebewellen 90 mit beispielsweise einer Kette zu verbinden. Dieses Prinzip ist für die Transportkette 70 ebenfalls denkbar, wenn die Aufnahmewalzen 82 oder Rollen 66 in ihrem Durchmesser dementsprechend groß sind, sodass die Halter 48 an Ihrem Außendurchmesser nicht miteinander in Verbindung stehen.

Wie in Fig. 8a-8c dargestellt, wo das Schwenken des Stators 10/Halters 48 mit möglicher Zustellung der Träufeldüsen 22a, 22b gezeigt ist, ist die Aushebeeinrichtung 88 bei einigen Ausführungsformen mit einer Schwenkeinrichtung 94 versehen, die den jeweiligen Stator 10 bevorzugt um seinen Schwerpunkt zum Neigen bringt.

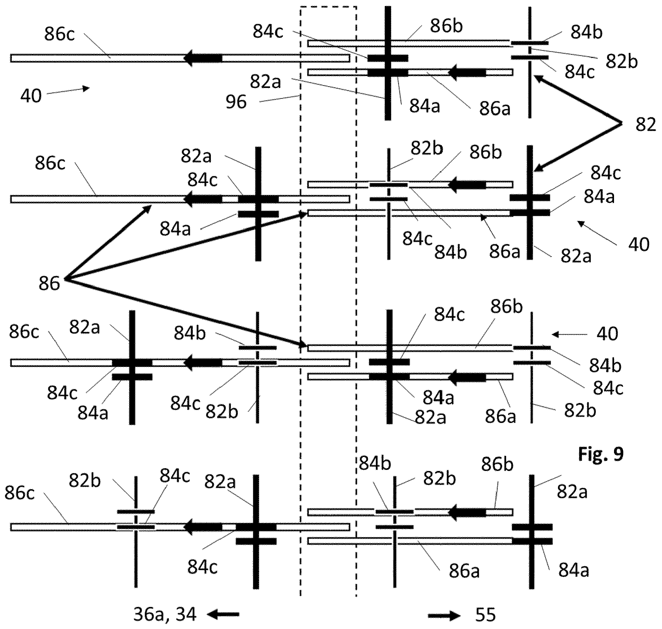

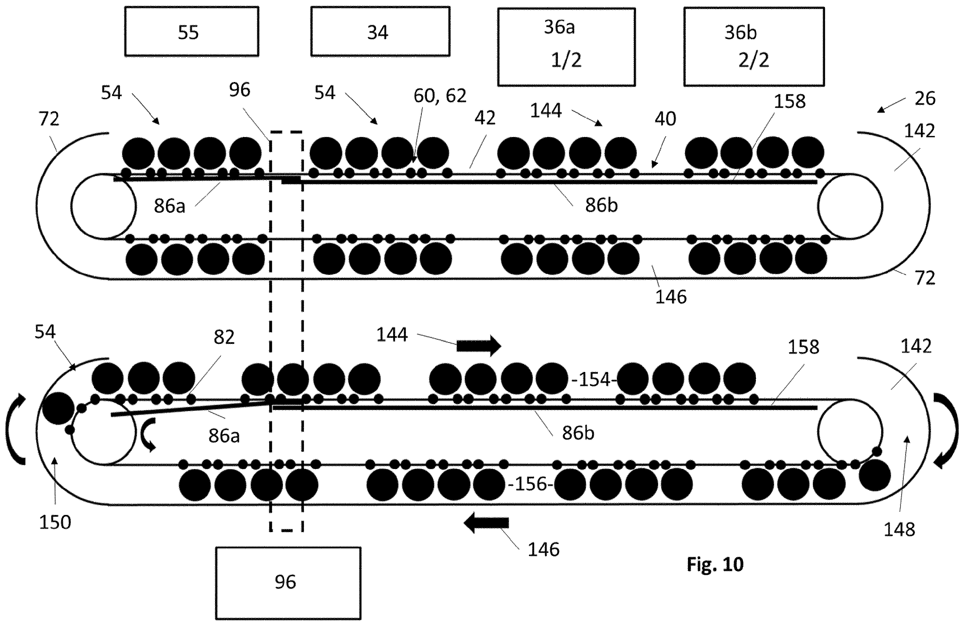

Für Fälle, in denen die Statoren 10 zum Imprägnieren nicht geschwenkt werden müssen, ist die Imprägnieranlage 26 in einigen Ausführungsformen auch ohne Aushebeeinrichtung 88 ausgeführt. Besonders bevorzugte Ausführungsbeispiele für diese Variante der Imprägnieranlage 26 sind in den Fig. 9 und 10 dargestellt. Diese Ausführungsformen wenden sich dem Problem zu, dass die noch nicht rotierenden Statoren 10 an der Be- und Entladestelle 55 beim Weitertakten zum Imprägnieren, insbesondere Träufeln, nacheinander hochbeschleunigt werden. Das gleiche gilt, wenn die Antriebskette 86 für die Rotation von der Be- und Entladestelle 55 bis zum Gelieren durchgezogen wird, da die nicht rotierenden Statoren 10 aus der unteren Ebene über den zweiten Umlenkbereich 150 (Umlaufpunkt) nach oben auf die Be- und Entladestelle 55 transportiert werden.

Bei einigen Ausführungsformen, von denen ein Beispiel in Fig. 9 dargestellt ist, ist daher vorgesehen, dass die Antriebskette 86, 86a, 86b, 86c zwischen Be- und Entladestelle 55 und Imprägnierbereich 34 beispielsweise mehrspurig ausgestattet ist und die Aufnahmewalzen 82, 82a, 82b mehrere Ritzel 84, 84a, 84b, 84c besitzen, die pro Batch 54 abwechselnd in Eingriff gelangen. Dabei ist pro Spur ein eigener Antrieb vorgesehen.

Insbesondere sind eine erste bis dritte Antriebskette 86a-86c vorgesehen. Eine erste und eine zweite Antriebskette 86a sind parallel an der Be- und Entladestelle 55 vorgesehen und jeweils mit einem eigenen Antrieb ausgestattet. In einem Übergabebereich 96 läuft auch die ebenfalls mit eigenem Antrieb angetriebene dritte Antriebskette 86c parallel zu der ersten und zweiten Antriebskette 86a, 86b und läuft dann alleine weiter zum Imprägnier-/Gelierbereich.

Die Aufnahmewalzen 82 des Förderbandes 42 weisen erste Aufnahmewalzen 82a und zweite Aufnahmewalzen 82b auf. Für jedes Batch 54 sind jeweils entweder die ersten Aufnahmewalzen 82a oder die zweiten Aufnahmewalzen 82b vorgesehen; mit anderen Worten folgt auf eine Gruppe erster Aufnahmewalzen 82a, die zur Aufnahme eines Batchs 54 ausgebildet ist, eine Gruppe zweiter Aufnahmewalzen 82b, die zur Aufnahme eines darauffolgenden Batchs 54 ausgebildet ist, und dann wieder eine Gruppe erster Aufnahmewalzen 82a, usw.

Die ersten Aufnahmewalzen 82a weisen ein erstes Ritzel 84a, das in Richtung quer zur Förderrichtung zum Eingriff mit der ersten Antriebskette 86a positioniert ist, und ein drittes Ritzel 84c auf, das zum Eingriff mit der dritten Antriebskette 86c positioniert ist.

Die zweiten Aufnahmewalzen 82b weisen ein zweites Ritzel 84b, das zum Eingriff mit der zweiten Antriebskette 86b positioniert ist, und das dritte Ritzel 84c auf, das zum Eingriff mit der dritten Antriebskette 86c positioniert ist.

In Fig. 9 sind untereinander vier aufeinanderfolgende Situationen beim Fördern der vier in Fig. 1 in der oberen Ebene dargestellten Batches 54 dargestellt, wobei von jeder für das jeweilige Batch 54 vorgesehenen Gruppe von Aufnahmewalzen 82a, 82b nur eine dargestellt ist. Gemäß der ganz oben gezeigten Darstellung von Fig. 9 wird zuerst ein erstes Batch von Statoren 10 (in Fig. 9 nicht dargestellt, das erste Batch weist z.B. vier Statoren 10, insbesondere in entsprechenden Haltern 48, auf) auf ersten Aufnahmewalzen 82a abgelegt. Diese sind über das erste Ritzel 84a mit der ersten Antriebskette 86a in Eingriff. Die erste Antriebskette 86a wird angetrieben, um die Rotation der Statoren 10 des ersten Batchs zu beginnen und zu beschleunigen. Dieses Batch wird dann weitergetaktet und die rotierenden Statoren 10 des ersten Batchs werden an die dritte Antriebskette 86b übergeben, die die Rotation über das dritte Ritzel 84c weiter antreibt. Noch während sich erste Aufnahmewalzen 82a des ersten Batchs an der Be- und Entladestelle 55 befinden, werden bereits zweite Aufnahmewalzen 82b für die Aufnahme eines darauffolgenden zweiten Batchs zugestellt, die aber nicht mit der ersten Antriebskette 82a, sondern nur mit der hier noch nicht angetriebenen zweiten Antriebskette 86b in Eingriff sind. Anschließend wird das zweite Batch auf die zugestellte Gruppe von zweiten Aufnahmewalzen 82b aufgelegt. Gemäß der Darstellung in der zweiten Reihe von Fig. 9 wird dann die zweite Antriebskette 86b angetrieben, um die zweiten Aufnahmewalzen 82b und damit die Statoren 12 des zweiten Batchs in Drehung zu versetzen und weiter zu takten, während bereits wieder erste Aufnahmewalzen für ein drittes Batch ohne Drehantrieb zugestellt werden. Die dritte Reihe von Fig. 9 zeigt das Hochbeschleunigen des dritten Batchs auf ersten Aufnahmewalzen 82a, und die vierte Reihe von Fig. 9 zeigt das Hochbeschleunigen des vierten Batchs auf zweiten Aufnahmewalzen 82b.

Befinden sich eine gerade Anzahl an Batches 54, wie in Fig. 1 dargestellt, in der Imprägnieranlage 26, ist es möglich, mit sich abwechselnden Ritzeln 84a, 84b und insgesamt drei Antrieben - erste bis dritte Antriebskette 86a, 86b, 86c - das Problem des unterschiedlichen Hochbeschleunigens zu umgehen. Bei einer ungeraden Anzahl an Batches wird die Anzahl an Ritzel und Antrieben dementsprechend erhöht.

Nachdem die Statoren 10 auf der Be- /Entladestelle 55 abgelegt wurden, ist bei einigen Ausführungsformen, von denen ein Beispiel in Fig. 10 gezeigt ist, vorgesehen, dass zwei Antriebsketten 86a, 86c - eine 86a für die Be- /Entladestelle 55 und eine 86c für den Imprägnier- /Gelierbereich - mit je einem Antrieb und die Aufnahmewalze 82 mit insgesamt zwei Ritzeln 84a, 84c verwendet werden. Mechanisch kann das System so aufgebaut werden (z.B. durch Kettenradstellung, Kettensteigung, Passfederverbindungen, etc.), dass im Übergabereich 96 die Kettenglieder exakt zueinander fluchten. In Kombination mit Drehgebern, die die Stellung des Antriebs und damit des Kettenrades abfragen, können dann die Antriebsketten 86a, 86c auf gleiche Drehzahl gebracht und synchronisiert werden, sodass beim Weitertakten nur ein Wechsel der Ritzel 84a, 84c stattfindet.

Für den Fall, dass bereits aus der unteren Ebene 156 fertige Statoren 10 nach oben zur Be- und Entladestelle 55 gefördert werden, ist bei einigen Ausführungsformen, von denen ein Ausführungsbeispiel ebenfalls in Fig. 10 dargestellt ist, die Antriebskette 86a schwenkbar ausgeführt. Sind die Statoren 10/Halter 48 am Beladeplatz 55 auf gleicher Drehzahl wie am Imprägnier- und Gelierplatz und ist der Imprägniervorgang abgeschlossen, werden die Statoren 10/Halter 48 weitertransportiert. Dabei wird die erste Antriebskette 86a am Beladeplatz 55, je nach Fortschritt der Halter 48 nach unten geschwenkt, sodass die Ritzel der darauffolgenden Aufnahmewalzen 82 nicht in Eingriff kommen, die Statoren 10/Halter 48, die noch nicht vollends weitertransportiert wurden aber noch rotieren.

Im Folgenden wird wiederum auf die Variante mit Aushebeeinrichtung 88 gemäß Fig. 6a-8c eingegangen. Ein großer Vorteil, wenn die Statoren 10 zum Imprägnieren, beispielsweise beim Träufeln, ausgehoben werden, ist, dass die Komponenten 80, 82, 84, 86 des Rotationsantriebes kostengünstig gestaltet werden können, da die zum Teil schweren Statoren 10 nicht aus dem Stand heraus in Rotation gebracht werden müssen, sondern bereits rotierend von der Aushebeeinrichtung 88 - siehe Fig. 6a-7c- oder Schwenkeinrichtung 94 - siehe Fig. 8a-8c - auf die sich drehenden Aufnahmewalzen 82 des Förderbandes 42 abgelegt werden.

Dadurch werden die Komponenten zum einen kleiner, sowie der Verschleiß im System geringer. Außerdem kann die Einheit, die zum Antreiben der Rotation der Statoren 10/Halter 48 dient, bevorzugt ein Kettensystem - z.B. Antriebskette 86 -, mit nur einem Antrieb gebaut werden. Ist die Imprägnieranlage 26 komplett leer, und es wird der erste Batch 54 an Statoren 10 beladen, steht die Antriebskette 86 noch still und der Batch 54 kann zum Imprägnieren weitertransportiert werden. Durch die Aushebeeinrichtung 88 werden die Statoren 10 dann losgelöst von der Transporteinrichtung 40 in Drehung versetzt. Bevor die Statoren 10 dann drehend wieder abgesetzt werden, startet die Antriebskette 86.

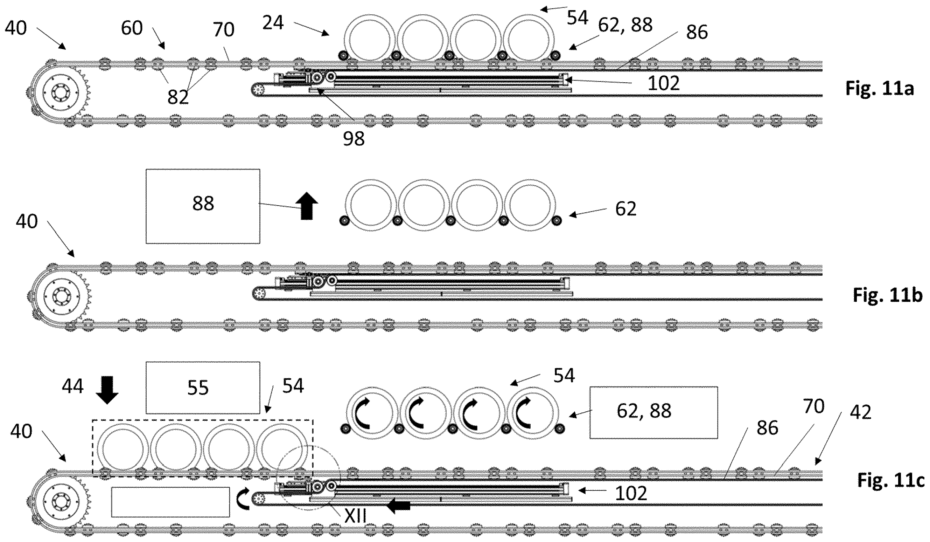

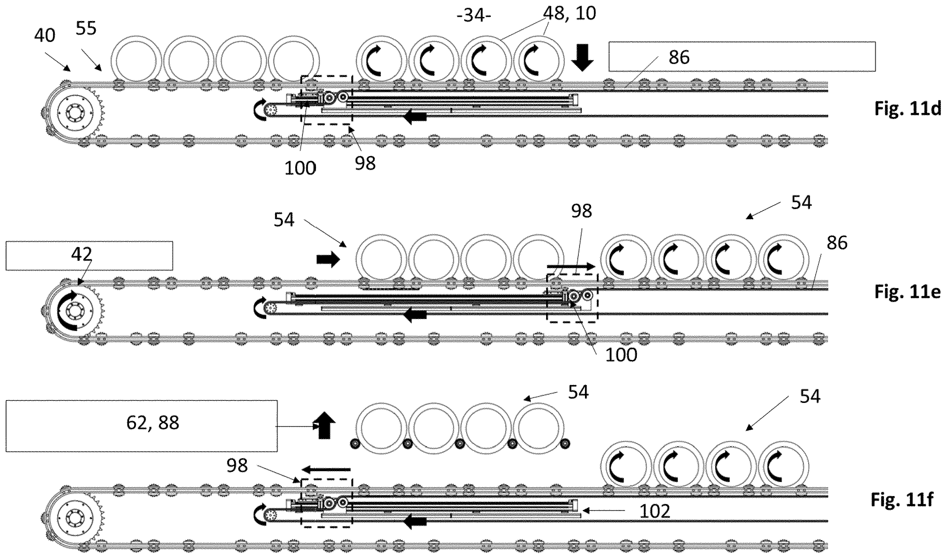

Bei einigen Ausführungsformen, von denen Beispiele in den Fig. 11a-11f und 20 dargestellt sind, ist die Einheit - Drehantriebsgetriebe 158 - zum Antreiben der Rotation so aufgebaut, dass die Antriebskette 86 bevorzugt in einem Mitnehmer 98 umgelenkt wird. Der Mitnehmer 98 ist entlang der Förderrichtung zwischen den in Fig. 11d und 11e gezeigten Stellungen vor und nach der Stelle zum Ausheben an der Imprägniereinrichtung 24 verschiebbar. Zum Verschieben kann bei einigen Ausführungsformen ein eigener Antrieb vorgesehen sein, bei der gezeigten Ausgestaltung ist der Mitnehmer - wie in Fig. 12 dargestellt - mit der Transportkette 70 verbindbar.

Fig. 11a zeigt die Situation nach dem Weiterführen des Batches 54 von der Be- und Entladestelle 55 zu der Imprägniereinrichtung 24. Fig. 11b zeigt das Ausheben des Batches 54 in der Imprägniereinrichtung 24. Fig. 11c zeigt, wie die Statoren 10 des ausgehobenen Batches 54 in Drehung versetzt werden. Es wird ein zweiter Batch 54 an der Be- und Entladestelle 55 aufgesetzt. Gleichzeitig startet die Rotation der Antriebskette 86. Fig. 12 zeigt das Detail XII von Fig. 11c, wo die Verbindung zwischen Mitnehmer 98 und Transportkette 70 hergestellt wird.

Fig. 11d zeigt das Absetzen des ersten Batches 54 auf der Transportkette 70 nach dem Imprägnieren/Träufeln. Die Statoren 10 werden dabei - gegebenenfalls in ihren Haltern 48 - weiter in Drehung gehalten.

Durch die Verbindung des Mitnehmers 98 mit der Transportkette 70, bevorzugt durch einen beispielsweise pneumatischen Aktor 100 am Mitnehmer, kann der Batch 54 dann mit der Transportkette 70 vom Träufeln zum Gelieren mitgenommen werden, wie dies im Übergang von Fig. 11d zu Fig. 11e gezeigt ist. Wird der darauffolgende Batch 54 am Imprägnierplatz ausgehoben - dies erfolgt kurz vor der in Fig. 11f gezeigten Situation -, wird die Verbindung zwischen Mitnehmer 98 und Transportkette 70 gelöst. Der Mitnehmer 98 wird durch einen weiteren Aktor 102, beispielsweise einem pneumatischen Aktor, zurück in die Ausgangslage gebracht. Die Antriebskette 86 bleibt dabei dauerhaft in Bewegung.

Die Figuren 13 bis 15 zeigen eine Draufsicht, eine Schnittansicht und eine perspektivische Ansicht (dargestellt ohne seitliche Ofenwand) eines konkreten Ausführungsbeispiels der Imprägnieranlage 26 mit (Ketten-)Umlaufsystem.

Da zum Aushärten der Flüssigkeit/des Harzes die Statoren 10 durch eine Ofenanlage - Ofen 32 - durchgeschleust werden, ist noch zu erwähnen, dass bedingt durch die höhere Temperatur eine entsprechende Längenausdehnung der Bauteile auftritt. Zusätzlich wird das Transportsystem nach längerem Betrieb einen gewissen Verschleiß zeigen und damit, am Beispiel der Transportkette 70, wird eine Längung der Kettenglieder auftreten. Dadurch passiert es, dass sich die Positionen der Statoren 10/Halter 48, z.B. Beladeposition und Imprägnierposition, verschieben. Die maximale Längenausdehnung und die Längung der Transportkette 70 kann allerdings berechnet werden und somit kann dieser Verschiebung entgegengewirkt werden.

Bevorzugt wird die Lage der Batches 54 zueinander mittels Sensoren (nicht dargestellt) abgefragt, und die Statoren 10/Halter 48 werden dann mit dem Transportsystem weiter oder weniger weit, oder sogar in die entgegengesetzte Richtung befördert und der Versatz dementsprechend kompensiert. Dazu kommt, dass die Statoren 10/Halter 48 mit ihrer wenigstens einen Rollfläche 58a, 58b auf Walzen/Rollen 82, 66, 90 abgelegt werden und sich dabei selbst zentrieren, wodurch eine extra Indexierung hinfällig wird. Zusammenfassend gesagt, durch die zylindrische Form des Stators 10 oder gegebenenfalls des Halters 48 zum Halten des Stators 10 und durch die zylindrische Form der Aushebeelemente/Ablagewalzen 90, 82, 66 rollt der Stator 10/Halter 48 immer auf die richtige Position, und Fehlstellungen können beim Abholen mit einem Greifsystem oder beim Ausheben für eine Applikation immer kompensiert werden.

Wie bereits erwähnt, können Statoren 10, insbesondere wenn sie an ihrem Außenumfang wenigstens einen im Wesentlichen zylindermantelförmige Bereich aufweisen, die als Rollfläche 58a, 58b geeignet ist, auch unmittelbar in der Imprägnieranlage 26 gehandhabt werden und auf dem Förderband 42 und den Rolleinrichtungen 60, 62 abgelegt und davon abgehoben werden.

Bei bevorzugten Ausgestaltungen der Imprägnieranlage 26 ist die Reihe von Haltern 48 vorgesehen. Das Halten von Statoren 10 während deren Handhabung in je einem Halter 48 hat den Vorteil, dass auch unrunde Statoren 10 - z.B. Statoren mit Auslegern zur Befestigung oder dergleichen - in der gleichen Weise gehandhabt werden können und dass auch Statoren 10 mit unterschiedlichen Abmessungen, z.B. Außendurchmesser und/oder axiale Länge, in der gleichen Imprägnieranlage 26 imprägniert werden können.

Im Folgenden werden bevorzugte Ausgestaltungen der Halter 48, von denen eine in den Fig. 16 und 17 dargestellt ist, näher erläutert.

Besondere Ausführungsformen des Halters 48 sind so gestaltet, dass beim Träufeln oder sonstigen Imprägnieren beide Wickelköpfe 28 innen und außen zugänglich sind. Bei einigen Ausführungsformen ist auch ein mögliches Schwenken der Rotationsachse um bis zu +/-15° von Vorteil. Bei bevorzugten Ausgestaltungen des Halters 48 ist ein Außenspannen vorgesehen, das zum möglichen Schwenken auch beim Träufeln zu bevorzugen ist. Vorzugsweise findet das Außenspannen jedoch im Wesentlichen nur im Bereich des Statorblechpakets 14 statt. Dabei ragt der Halter 48 bei bevorzugten Ausführungen nicht oder nur geringfügig in beiden axialen Richtungen über die Enden der Statorblechpaket-Stirnseiten 30 hinaus, wodurch weiterhin ein sehr guter Zugang für die Träufeldüsen 22a-22d zu den Wickelköpfen 28 gewährt wird. Bei einigen Ausführungsformen ist eine nahezu radial ausgerichtete Träufeldüse 22a-22d auf die nur leicht über das Blechpaket 14 axial überstehenden Nutisolationspapiere 20 vorgesehen, um ein Spritzen des Harzes auf die Blechpaketstirnseite 30 zu verhindern.

Ein Halten in dem Halter 48 ist auch mit einem Stator 10 möglich, der auch lokale Erhöhungen am Außendurchmesser besitzt (z.B. Befestigungslaschen). Mit bevorzugten Ausgestaltungen des Halters 48 wird die Handhabung unabhängig von der Außenkontur des Stators 10, um auch Statoren 10 mit unterschiedlichen Außenkonturen über die gleiche Imprägnieranlage 26 produzieren zu können.

Der jeweilige Halter 48 ist zum Halten, Drehen und Transportieren je eines Stators 10 im Zuge eines Imprägnierens des Stators 10 mit Harz ausgebildet. Der Halter 48 weist eine Spanneinrichtung 56 zum Einspannen des Stators 10 und wenigstens eine Rollfläche 58a, 58b zum rollenden Abstützen des sich drehenden Halters 48 mit eingespanntem Stator 10 auf.

Wenngleich in nicht dargestellten Ausführungsformen Halter 48 mit nur einer entsprechend längeren zylindrischen Rollfläche vorgesehen sind, haben die dargestellten Halter 48 mehrere Rollflächen 58a, 58b, die mit axialem Abstand zueinander angeordnet sind. Bei den dargestellten Ausführungsformen umgeben die Rollflächen 58a, 58b den Stator 10 radial weiter außen als der Außenumfang des Stator 10 - so dass der Stator 10 durch den Halter 48 wie durch einen Käfig umgeben wird. Insbesondere ist die wenigstens eine Rollfläche 58a, 58b axial im Bereich des Blechpakets 14 des im Betrieb darin gehaltenen Stators 10 um das Blechpaket 14 herum angeordnet.

Die wenigstens eine Rollfläche 58a, 58b ist an einem Ringbereich 104a, 104b des Halters 48 vorgesehen. Bei mehreren Rollflächen 58a, 58b sind entsprechend die Ringbereiche durch Ringelemente 104a, 104b des Halters 48 gebildet, die durch sich in axiale Richtung erstreckende Streben 106 axial miteinander verbunden sind. Die Streben 106 können teleskopartig oder massiv ausgebildet sein.

Bei einigen nicht näher dargestellten Ausführungsformen kann der Stator 10 im insbesondere als Käfig ausgebildeten Halter 48 axial gespannt werden. Bei den dargestellten Ausführungsformen ist der Halter 48 zum radialen Spannen des Stators 10 ausgebildet, insbesondere derart, dass beide Stirnflächen 30 frei zugänglich sind. Ein Beispiel einer derzeit bevorzugte Ausführungsform mit einer radial am Außenumfang des Stators 10 spannenden Spanneinrichtung 56 ist in den Fig. 16 und 17 gezeigt.

Zum Beispiel werden Spannelemente 120 mit radial am Blechpaket 14 anliegenden Druckstücken/Reibflächen zwischen den Ringen 104a, 104b des Halter 48 angebracht. Die Druckstücke können beispielsweise über einen Kniehebel, einem Exzenterspanner, oder über ein Schraub-/Keilgetriebe 122 zugestellt werden, oder auch als Schwenkspanner ausgeführt sein.

Das radiale Spannen hat insbesondere die Vorteile, dass der insbesondere als Käfig ausgebildete Halter 48 keinen axialen Überstand über das Blechpaket 14 hat, so dass ein besserer Zugang für die Träufeldüsen 22a-22d gegebenen ist. Weiter ist der gleiche Halter 48 zum Einspannen unterschiedlich langer Statoren 10 geeignet. Weiter funktioniert das radiale Einspannen sowohl bei Statoren mit zylindrischer Außenfläche als auch mit Statoren mit radialen Vorsprüngen.

In Fig. 17 ist der Halter 48 in Auflage auf einer der Rolleinrichtungen 60, 62 gezeigt. Die Rollflächen 58a, 58b an den Ringen 104a, 104b weisen eine V-Rille 124 auf, in die komplementär ausgebildete Ringvorsprünge 76 an auf den Wellen 80, 90 aufsitzenden oder ausgebildeten Rollen 66 eingreifen. Somit ist eine Führung zum seitlichen Führen der Halter 48 geschaffen Diese Führung hat sich als vorteilhaft hinsichtlich der geringsten Verschmutzungsanfälligkeit herausgestellt. Wie oben bereits erwähnt, sind bei anderen, hier nicht näher dargestellten Ausführungsformen andere Führungen zum seitlichen Führen der Halter 48 auf der Transportbahn 142 oder den sonstige Rolleinrichtungen 60, 62 vorgesehen. Zum Beispiel sind die Rollen 66 mit Bordscheiben, mit V-Nuten, mit balliger Lauffläche oder mit Ringvorsprung an der Lauffläche oder mit Rillen an der Lauffläche und entsprechend komplementäre Strukturen an dem Halter 48 oder an wenigstens einer Rollfläche 58a, 58b desselben vorgesehen. Entsprechend können auch die Schienen 68 oder sonstige Führungselemente 64 zum seitlichen Führen ausgebildet sein.

Bei einer bevorzugten Ausführungsform eines mit der gezeigten Ausgestaltung der Imprägnieranlage 26 durchgeführten Imprägnierverfahrens werden die Statoren 10 zunächst bereitgestellt und jeder Stator 10 wird in einen Halter 48 eingespannt. Anschließend wird ein Batch 54 von Statoren 10 mit Haltern an der Be- und Entladestelle 55 einfach durch Auflegen auf das Förderband 42 mit einer Bewegung quer zur Statorachse aufgelegt. Die Statoren 10 werden über die Transportbahn 142 transportiert. Dabei werden sie beim Imprägnieren und Gelieren unabhängig von der Bewegung des Förderbandes 42 drehend angetrieben. Nach dem Umlenken an dem ersten Umlenkbereich 148 laufen die Statoren 10 in dem Rücklaufbereich 146 zurück. Sofern hier wie dargestellt nur ein Aushärten stattfindet, ist eine gesonderte Drehung der Statoren 10 nicht mehr erforderlich. Die Statoren 10 rollen lediglich beim Weitertransport durch den Rücklaufbereich 146 und können hierzu durch oben angreifende Rollen 66 oder dergleichen erfasst werden. Durch erneutes Umlenken gelangen die fertigen Statoren 10 mit Halter 48 erneut zur Be- und Entladestelle 55. Nach dem im Zuge des Entladens durchgeführten Abhebens werden die Halter 48 von den fertig imprägnierten Statoren 10 entfernt und können - eventuell nach Durchlaufen einer nicht dargestellten Reinigungsstrecke - erneut für neu bereit gestellte Statoren 10 verwendet werden.

### Bezugszeichenliste:

- 10: Stator
- 14: Blechpaket
- 16: Nut
- 18: Wicklung
- 20: Isolationspapier
- 22a-22d: Träufeldüsen
- 24: Imprägniereinrichtung
- 26: Imprägnieranlage
- 28: Wickelkopf
- 30: Stirnfläche
- 32: Ofen
- 34: Imprägnierbereich
- 36a, 36b: Gelierbereich
- 38: Aushärtebereich
- 40: Transporteinrichtung
- 42: Förderband
- 44: Handlingseinheit
- 46: Roboterarm
- 48: Halter
- 50: Geliereinrichtung
- 52: Aushärteeinrichtung
- 54: Batch
- 55: Be- und Entladestelle
- 56: Spanneinrichtung
- 58a, 58b: Rollfläche
- 60: Rolleinrichtung (Geliereinrichtung)
- 62: Rolleinrichtung (Imprägniereinrichtung)
- 64: Führungselement
- 66: Rolle
- 68: Schiene
- 70: Transportkette
- 72: Lauffläche
- 74: Bordscheibe
- 76: Ringvorsprung
- 80: Welle
- 82, 82a,: 82b Aufnahmewalze
- 84, 84a, 84b, 84c: Ritzel
- 86, 86a, 86b, 86c: Antriebskette (Rotation, Beispiel für Drehantriebsgetriebe)
- 88: Aushebeeinrichtung
- 90: Aushebewelle
- 92: Träufeldüsenanordnung
- 94: Schwenkeinrichtung
- 96: Übergabebereich
- 98: Mitnehmer
- 100: Aktor am Mitnehmer
- 102: Aktor zum Zurückstellen
- 104a, 104b, 104c: Ringelement
- 106: Strebe
- 120: Spannelement
- 122: Schraub-/Keilgetriebe
- 124: V-Rille
- 142: Transportbahn
- 144: Vorlaufbereich
- 146: Rücklaufbereich
- 148: erster Umlenkbereich
- 150: zweiter Umlenkbereich
- 152: Umlenkkurve
- 154: erste Ebene
- 156: zweite Ebene
- 158: Drehantriebsgetriebe

## Patentansprüche

1. Imprägnieranlage (26) zum Imprägnieren von Statoren (10) in Serienfertigung, umfassend eine Transporteinrichtung (40) zum Transportieren einer Reihe von Statoren (10) durch Bereiche der Imprägnieranlage (26), wobei die Transporteinrichtung (40) eine umlaufende Transportbahn (142) mit einem Vorlaufbereich (144) und einem Rücklaufbereich (146) sowie Umlenkbereichen (148, 150) dazwischen und ein Förderband (42) aufweist, das dazu ausgebildet ist, dass die Statoren (10) quer zur jeweiligen Statorachse auf dem Förderband (42) abgelegt oder abgehoben werden können und beim Transport durch den Vorlauf- oder Rücklaufbereich (148, 150) zumindest abschnittsweise drehend auf dem Förderband (42) aufliegen.

2. Imprägnieranlage (26) nach Anspruch 1, **dadurch gekennzeichnet,**
**dass** das Förderband (42) in dem Vorlaufbereich (144) unterhalb der Statorachsen der sich im Betrieb in dem Vorlaufbereich befindlichen Statoren (10) angeordnet ist, so dass die Statoren (10) auf dem Förderband (42) aufliegend durch den Vorlaufbereich (144) der Transportbahn (142) transportierbar sind, und dass die Transporteinrichtung (40) in dem Rücklaufbereich (146) eine Lauffläche (72) zum Aufliegen der durch den Rücklaufbereich (146) zu transportierenden Statoren (10) aufweist.

3. Imprägnieranlage (26) nach Anspruch 2, **dadurch gekennzeichnet,**
**dass** das Förderband (42) in dem Rücklaufbereich (146) oberhalb der sich im Betrieb in dem Rücklaufbereich (146) befindlichen Statoren (10) angeordnet ist und dazu eingerichtet ist, die Bewegung der auf der Lauffläche (72) abrollenden Statoren (10) anzutreiben.

4. Imprägnieranlage (26) nach einem der voranstehenden Ansprüche, **dadurch gekennzeichnet, dass** an einem Anfang des Vorlaufbereichs (144) der umlaufenden Transportbahn (142) eine Be- und Entladestelle (55) angeordnet und so ausgebildet ist, dass die Statoren (10) quer zur Statorachse auf dem Förderband (42) abgelegt und davon abgehoben werden können.

5. Imprägnieranlage (26) nach einem der voranstehenden Ansprüche, **dadurch gekennzeichnet, dass** die Umlenkbereiche (148, 150) Umlenkkurven zum Erfassen der Statoren (10) und Umlenken derer Bewegungsbahnen aufweist.

6. Imprägnieranlage (26) nach einem der voranstehenden Ansprüche, **dadurch gekennzeichnet, dass** der Vorlaufbereich (144) und der Rücklaufbereich (146) übereinander angeordnet sind oder dass der Vorlaufbereich (144) über dem Rücklaufbereich (146) angeordnet ist.

7. Imprägnieranlage (26) nach einem der voranstehenden Ansprüche, **dadurch gekennzeichnet, dass** der Vorlaufbereich (144) der Transportbahn (142) durch einen Imprägnierbereich (34) und einen Gelierbereich (36a, 36b) der Imprägnieranlage (26) führt, wobei in dem Imprägnierbereich (34) und dem Gelierbereich (36a, 36b) ein Drehantriebsgetriebe (158) zum Antreiben einer Drehbewegung der auf dem Förderband (42) liegenden Statoren (10) vorgesehen ist.

8. Imprägnieranlage (26) nach einem der voranstehenden Ansprüche, **dadurch gekennzeichnet,**
**dass** der Rücklaufbereich (146) und/oder wenigstens einer der Umlenkbereiche (148, 150) durch einen in Transportrichtung nach einem Gelierbereich (36a, 36b) liegenden Aushärtebereich (38) der Imprägnieranlage (26) führt.

9. Imprägnieranlage (26) nach einem der voranstehenden Ansprüche, **dadurch gekennzeichnet, dass** das Förderband (42) wenigstens ein umlaufendes Zugmittel sowie daran angebrachte Rollen (66) oder Walzen (82) zum rollenden Aufliegen der Statoren (10) aufweist, welche Rollen (66) oder Walzen (82) um sich quer zur Transportrichtung verlaufende Drehachsen drehbar sind.

10. Imprägnieranlage (26) nach Anspruch 9, **dadurch gekennzeichnet,**
**dass** die Rollen (66) oder Walzen (82) ausgewählt sind aus einer Gruppe, die Rollen mit Bordscheiben (74), Rollen oder Walzen (82) mit Ritzel, Rollen mit V-Nuten, Rollen mit balliger Lauffläche, Rollen mit Ringvorsprung (76) an der Lauffläche, Rollen mit Rillen an der Lauffläche, aktiv angetriebene Rollen, aktiv angetriebene Ritzel und durch eine gemeinsame Welle (80, 90) verbundene Rollen, Ritzel und Konturräder umfasst.

11. Imprägnieranlage (26) nach Anspruch 9 oder 10, **dadurch gekennzeichnet,**
**dass** Aufnahmebereiche an dem Förderband (42) zum Angreifen an einem Stator (10) jeweils eine erste bis vierte Rolle (66) umfassen, wobei die erste und zweite Rolle (66) axial beabstandet zueinander dazu angeordnet sind, an wenigstens einer Rollfläche (58a, 58b) des zylindrischen Stators (10) oder eines den Stator haltenden Halters (48) in einer Winkelstellung zwischen 3 Uhr und 6 Uhr anzugreifen, und die dritte und vierte Rolle (66) axial beabstandet zueinander dazu angeordnet sind, an der wenigstens einen Rollfläche (58a, 58b) in einer Winkelstellung zwischen 6 Uhr und 9 Uhr anzugreifen.

12. Imprägnieranlage (26) nach einem der Ansprüche 9 bis 11, **dadurch gekennzeichnet,**
**dass** das Förderband (42) benachbarte Auflageplätze für einen ersten und einen zweiten Stator (10) aufweist, wobei zwischen den Aufnahmeplätzen eine gemeinsame Welle (90) oder Rolle angeordnet ist, die dazu ausgebildet ist, dass der erste und zweite Stator (10) darauf aufliegen, so dass eine Drehung des einen Stators (10) über die gemeinsame Welle (90) oder Rolle auf den zweiten Stator übertragbar ist oder dass der erste und zweite Stator (10) über die gemeinsame Welle (90) oder Rolle drehend angetrieben werden.

13. Imprägnieranlage (26) nach einem der Ansprüche 9 bis 12, **dadurch gekennzeichnet,**
**dass** das Förderband (42) zusätzlich zu dem umlaufenden Zugmittel zumindest an einem Teilbereich wenigstens eines des Vorlaufbereichs (144) und des Rücklaufbereichs (146) ein zweites Zugmittel aufweist, das unabhängig von dem umlaufenden Zugmittel bewegbar ist und zum Antreiben einer Rotationsbewegung der Statoren (10) oder der Rollen (66) oder Walzen (82) ausgebildet ist.

14. Imprägnieranlage (26) nach einem der voranstehenden Ansprüche, **gekennzeichnet durch** mehrere Halter (48) für die Statoren (10), die als Käfig zur Aufnahme eines Stators (10) mit wenigstens einer um den aufgenommenen Stator (10) herum laufenden Rollfläche (58a, 58b) zur rollenden Auflage auf dem Förderband (42) ausgebildet sind.

15. Imprägnierverfahren zum Imprägnieren von Statoren (10) in Serienfertigung unter Verwendung einer Imprägnieranlage (26) nach einem der voranstehenden Ansprüche.
